# EUROPEAN PATENT APPLICATION

(11) **EP 4 848 810 A1**
(43) Date of publication of application: **02.12.2026**
(21) Application number: 25751081.8
(22) Date of filing: 13.01.2025
(51) Int. Cl.: H04W 36/00

(54) **COMMUNICATION METHOD AND APPARATUS**

(30) Priority: 08.02.2024 CN 202410178193
(71) Applicant: HUAWEI TECHNOLOGIES CO., LTD., Shenzhen, Guangdong 518129 (CN)
(72) Inventor: XU, Shengfeng, Shenzhen, Guangdong 518129 (CN); SUN, Haiyang, Shenzhen, Guangdong 518129 (CN); XU, Yishan, Shenzhen, Guangdong 518129 (CN); LI, Haoran, Shenzhen, Guangdong 518129 (CN)
(74) Representative: Gill Jennings & Every LLP
(86) International application number: PCT/CN2025/072140
(87) International publication number: WO 2025/167479

(57) **Abstract**

This application provides a communication method and apparatus, and relates to the field of communication technologies. A first device obtains first information. The first information is used by the first device to determine to set up a bidirectional session, a first terminal in the first device may send a setup request message of a first session (a bidirectional session), and a second terminal in the first device may send a setup request message of a second session (a bidirectional session). Because the first device determines, based on the first information, that the first device needs to set up the bidirectional session, when service data of the first device is switched between the first session and the second session, a communication connection does not need to be set up again, thereby reducing a switching delay and ensuring user service experience.

## Description

### CROSS-REFERENCE TO RELATED APPLICATIONS

This application claims priority to Chinese Patent Application No. 202410178193.3, filed with the China National Intellectual Property Administration on February 8, 2024 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With the development of communication technologies, a future mobile communication device may include two user equipments (user equipment, UE) or two universal subscriber identity modules (universal subscriber identity module, USIM). The mobile communication device may be connected to two radio access networks (radio access network, RAN) respectively via the two UEs (or the two USIMs), and transmit service data via the two RANs. Due to a service transmission requirement, a service of the mobile communication device may need to be switched between different UEs. In a switching process, a communication connection needs to be set up again, and a delay is long, affecting user service experience.

### SUMMARY

This application provides a communication method and apparatus, to reduce a UE switching delay and improve user service experience.

According to a first aspect, this application provides a communication method. The method may be performed by a first device, and the first device includes a first terminal and a second terminal. The first terminal (or the second terminal) may be a terminal, or may be a component (for example, a processor, a chip, or a chip system) in a terminal, or may be a logical module or software that implements a part or all of terminal functions. This is not specifically limited herein in this application.

The method may be applied to a 5G communication system or a communication system above 5G, or may be applied to a non-terrestrial communication system. This is not specifically limited in this application. The method is performed as follows:
obtaining first information, where the first information is used by the first device to determine to set up a bidirectional session; sending a first message, where the first message includes a setup request message of a first session, the first session is a bidirectional session, and the first session is a session of the first terminal; and sending a second message, where the second message includes a setup request message of a second session, a session parameter of the second session is related to a session parameter of the first session, the second session is a bidirectional session, and the second session is a session of the second terminal.

It should be noted that the bidirectional session may also be referred to as an associated session between UEs. In this application, the first terminal in the first device may send the setup request message of the first session (the bidirectional session), and the second terminal in the first device may send the setup request message of the second session (the bidirectional session). Because the first device determines, based on the first information, that the first device needs to set up the bidirectional session, the setup of the bidirectional session by a network is managed and controlled. In addition, the session parameter of the second session may be determined based on the session parameter of the first session, to ensure that the session parameter of the first session is related to or the same as that of the second session, thereby facilitating a session association. Because the session parameter of the second session is related to or the same as that of the first session, when creating the second session, the second terminal does not need to re-obtain the session parameter of the second session. In view of this, a creation delay of the second session can be reduced, data processing efficiency can be improved, and user service experience can be ensured.

In an optional manner, the first information includes a route selection descriptor (route selection descriptor, RSD) corresponding to a first service, the RSD includes bidirectional session indication information and the session parameter of the first session, the bidirectional session indication information indicates the setup of the bidirectional session, and the first information is in a route selection policy of the first terminal.

In this application, the first information may be the route selection policy (from a core network device), and the route selection policy includes bidirectional session indication information corresponding to different services. For example, a service 1 corresponds to bidirectional session indication information, and a service 2 corresponds to non-bidirectional session indication information. When a service of the first device is triggered, the first device may query the RSD in the route selection policy to determine session indication information corresponding to the service, and determine, based on this, whether to set up a bidirectional session. In addition, the session parameter of the first session may be further obtained based on the RSD. In view of this, the first device needs to evaluate only the route selection policy, and obtain information for setting up the bidirectional session and the session parameter, thereby reducing processing complexity of the device.

In an optional manner, the first information is bidirectional session policy information, and the first terminal determines the session parameter of the first session according to the route selection policy of the first terminal.

In this application, the first information is the bidirectional session policy information (from the core network device, for example, a policy control function (policy control function, PCF)). When the service of the first device is triggered, the first device may query the bidirectional session policy information to determine whether to set up the bidirectional session. Then, the first terminal may obtain the session parameter of the first session according to the route selection policy of the first terminal. In view of this, the new policy information is introduced to reduce impact on the route selection policy.

In an optional manner, the policy information includes: service information that allows the bidirectional session, and/or allowing use of the bidirectional session.

In view of this, the first device may determine which services allow setup of bidirectional sessions, and whether the first device allows the setup of the bidirectional session. In view of this, flexibility of controlling the setup of the bidirectional session by the network is improved.

In an optional manner, the obtaining the first information includes: receiving the first information from a first network element. The first information is determined based on bidirectional capability information and/or bidirectional subscription information of the first device.

In view of this, the network may control to which terminals the first information is sent.

In an optional manner, the second terminal determines the session parameter of the second session based on the session parameter of the first session.

In this application, because the first device determines to set up the bidirectional session, the second terminal may determine the session parameter of the second session based on the session parameter of the first session, to reduce the creation delay of the second session, improve the data processing efficiency, and ensure that the session parameter of the first session is related to or the same as that of the second session, thereby facilitating the session association.

In an optional manner, after obtaining the first information, the first device determines the session parameter of the first session according to the route selection policy of the first terminal, and determines the session parameter of the second session according to a route selection policy of the second terminal.

In view of this, the two sessions are set up in advance. In comparison with that session parameters of sessions are obtained to create the sessions only when a UE is switched, transmission efficiency can be improved.

In an optional manner, before the second terminal sends the second message, the first terminal further receives a setup accept message of the first session.

It should be noted that the setup accept message of the first session includes: allowing the first terminal to set up the bidirectional session. Based on the setup accept message of the first session, the first device may determine that the first session may perform bidirectionality (that is, may be used as the bidirectional session). In addition, based on the setup accept message of the first session, the second terminal determines that the second message may be sent. This avoids triggering setting up the session of the second terminal when the first session fails to be set up.

In an optional manner, the first message further includes at least one of the following parameters:
bidirectional session request information or a bidirectional identifier. The bidirectional identifier is generated by the first device.

The bidirectional session request information may be referred to as a bidirectional session request type, and a network element of the core network determines, based on the information, that the first session is bidirectional. The bidirectional identifier is generated by the first device by obtaining the first information. In view of this, the first device generates the unique bidirectional identifier, so that the core network associates the two sessions.

In an optional manner, the second message further includes at least one of the following parameters: the bidirectional session request information, an identifier of the first session, or the bidirectional identifier.

The network element of the core network determines, based on the foregoing information, that the second session is bidirectional.

In an optional manner, the bidirectional identifier in the second message is generated by the first device; or the first device receives the bidirectional identifier, the bidirectional identifier is allocated by a second network element, and the second network element is configured to manage the first session.

According to a second aspect, this application provides a communication method. The method may be performed by a second network element, and the second network element is a session management network element. The second network element may be the second network element, or may be a component (for example, a processor, a chip, or a chip system) in the second network element, or may be a logical module or software that implements a part or all of functions of the second network element. This is not specifically limited herein in this application.

The method includes: receiving a third message, where the third message includes a setup request message of a first session and an identifier of the first session, the first session is a bidirectional session, and the first session is a session of a first terminal; receiving a fourth message, where the fourth message includes a setup request message of a second session, an identifier of the second session, and identification information, the second session is a bidirectional session, the second session is a session of a second terminal, the identification information is the bidirectional identifier or the identifier of the first session, and the bidirectional identifier is related to the first session; and creating a first association relationship between the first session and the second session based on the identification information.

In this application, after receiving the third message and the fourth message, the second network element creates the association between the first session and the second session based on the bidirectional identifier (or the identifier of the first session), where for example, a same internet protocol (internet protocol, IP) address is shared, to ensure service continuity in a process of switching service data between the two sessions. Therefore, user service experience can be ensured.

In an optional manner, the identification information is the bidirectional identifier, the third message further includes the bidirectional identifier, and the bidirectional identifier is generated by the first terminal or the second terminal. In view of this, the first terminal or the second terminal generates the unique bidirectional identifier, so that a core network associates the two sessions.

In an optional manner, the identification information is the bidirectional identifier, and the third message further includes bidirectional session request information. The second network element generates the bidirectional identifier based on the bidirectional session request information; and sends a setup accept message of the first session, where the setup accept message includes the bidirectional identifier. In view of this, the second network element generates the unique bidirectional identifier, so that a core network associates the two sessions.

In an optional manner, the second network element stores a second association relationship between the bidirectional identifier and the first session. For example, the second relationship may be stored in a context of the first session. In view of this, when receiving the bidirectional identifier from the second terminal, the second network element may determine the first session based on the second association relationship and the bidirectional identifier, to facilitate the association between the first session and the second session.

In an optional manner, when the identification information is the bidirectional identifier, and the third message further includes the bidirectional identifier, the second network element creates the first association relationship between the first session and the second session based on the bidirectional identifier. In view of this, the core network can associate the two sessions.

In an optional manner, the identification information is the identifier of the first session, and the second network element creates the first association relationship between the first session and the second session based on the identifier of the first session and the identifier of the second session. In view of this, a core network can associate the two sessions.

In an optional manner, the second network element further sends a sixth message. The sixth message includes the identifier of the first session, bidirectional information, and an identifier of the second network element, the second network element is configured to manage the first session, and the bidirectional information is the bidirectional identifier or a bidirectional session type.

In view of this, the fifth network element can learn which second network element can perform bidirectional processing.

According to a third aspect, this application provides a communication method. The method may be performed by a fourth network element, and the fourth network element is an access management network element of a second terminal. The fourth network element may be the fourth network element, or may be a component (for example, a processor, a chip, or a chip system) in the fourth network element, or may be a logical module or software that implements a part or all of functions of the fourth network element. This is not specifically limited herein in this application.

The method includes: receiving a fifth message, where the fifth message includes an identifier of a second network element and a bidirectional identifier, the second network element is configured to manage a first session, the bidirectional identifier is related to the first session, and the first session is a session of a first terminal; receiving a second message, where the second message includes a setup request message of a second session and the bidirectional identifier, and the second session is a session of the second terminal; determining the second network element based on the bidirectional identifier, where the second network element is further configured to manage the second session; and sending a fourth message to the second network element, where the fourth message includes the setup request message of the second session; or sending the fourth message to a third network element, where the fourth message includes the setup request message of the second session and the identifier of the second network element, and the third network element is configured to manage the second session in a roaming network of the second terminal.

In this application, the fourth network element receives the identifier of the second network element and the bidirectional identifier, to determine the second network element based on the bidirectional identifier in the second message from the second terminal. In this way, the same second network element manages the first session and the second session, thereby facilitating an association between the first session and the second session.

In an optional manner, after receiving the fifth message, the fourth network element further stores a third association relationship between the identifier of the second network element and the bidirectional identifier, to determine the second network element based on the third association relationship after the bidirectional identifier is received.

In an optional manner, the fourth network element determines the second network element based on the bidirectional identifier and the third association relationship.

In an optional manner, the second message further includes bidirectional session request information. When the setup request message of the second session is the bidirectional session request information, the fourth network element determines the second network element based on the bidirectional identifier. In view of this, it can be learned that the fourth network element determines the second network element based on the bidirectional identifier only when a bidirectional session is performed. In another case, the second network element does not need to determine the second network element.

In an optional manner, the fifth message further includes a bidirectional session type, so that the fourth network element determines that the second network element can manage the bidirectional session.

In an optional manner, the fourth message further includes an identifier of the second session and identification information, the identification information is the bidirectional identifier or an identifier of the first session, and the bidirectional identifier is related to the first session. In this application, the association between the first session and the second session is created based on the bidirectional identifier (or the identifier of the first session), where for example, a same IP address is shared, to ensure service continuity in a process of switching service data between the two sessions.

According to a fourth aspect, this application provides a communication method. The method may be performed by a fourth network element, and the fourth network element is an access management network element of a second terminal. The fourth network element may be the fourth network element, or may be a component (for example, a processor, a chip, or a chip system) in the fourth network element, or may be a logical module or software that implements a part or all of functions of the fourth network element. This is not specifically limited herein in this application.

The method includes: receiving a fifth message, where the fifth message includes an identifier of a second network element and an identifier of a first session, the second network element is configured to manage the first session, and the first session is a session of a first terminal; receiving a second message, where the second message includes a setup request message of a second session and an identifier of the first session, and the second session is a session of the second terminal; determining the second network element based on the identifier of the first session, where the second network element is further configured to manage the second session; and sending a fourth message to the second network element, where the fourth message includes the setup request message of the second session; or sending the fourth message to a third network element, where the fourth message includes the setup request message of the second session and the identifier of the second network element, and the third network element is configured to manage the second session in a roaming network of the second terminal.

In this application, the fourth network element receives the identifier of the second network element and the identifier of the first session, to determine the second network element based on the identifier of the first session in the second message from the second terminal. In this way, the same second network element manages the first session and the second session, thereby facilitating an association between the first session and the second session.

In an optional manner, after receiving the fifth message, the fourth network element further stores a fourth association relationship between the identifier of the second network element and the identifier of the first session, to determine the second network element based on the third association relationship after the identifier of the first session is received.

In an optional manner, the fourth network element determines the second network element based on the identifier of the first session and the fourth association relationship.

In an optional manner, the second message further includes bidirectional session request information. When the setup request message of the second session is the bidirectional session request information, the fourth network element determines the second network element based on the identifier of the first session.

In an optional manner, the fifth message further includes a bidirectional session type.

In an optional manner, the fourth message further includes an identifier of the second session and identification information, the identification information is a bidirectional identifier or the identifier of the first session, and the bidirectional identifier is related to the first session.

According to a fifth aspect, this application provides a communication method. The method may be performed by a fifth network element, and the fifth network element is a data management network element, configured to manage data information of a first terminal and a second terminal. The fifth network element may be the fifth network element, or may be a component (for example, a processor, a chip, or a chip system) in the fifth network element, or may be a logical module or software that implements a part or all of functions of the fifth network element. This is not specifically limited herein in this application.

The method includes: receiving a sixth message, where the sixth message includes an identifier of a first session, bidirectional information, and an identifier of a second network element, the first session is a session of the first terminal, the second network element is configured to manage the first session, and the bidirectional information is a bidirectional identifier or a bidirectional session type; and sending a fifth message to a fourth network element based on an association relationship between the first terminal and the second terminal, where the fifth message includes an identifier of the second network element, and the fourth network element is an access management network element of the second terminal.

In this application, the fifth network element sends the identifier of the second network element, so that the fourth network element receiving the second message from the second terminal determines the second network element to which the fourth message is sent. In view of this, data processing efficiency can be improved.

In an optional manner, when the bidirectional information is the bidirectional identifier, the fifth message further includes the bidirectional identifier; or when the bidirectional information is the bidirectional session type, the fifth message further includes the identifier of the first session.

In an optional manner, the fifth network element sends the fifth message to the fourth network element based on the association relationship between the first terminal and the second terminal and the bidirectional information.

In an optional manner, the fifth message further includes the bidirectional session type.

According to a sixth aspect, an embodiment of this application provides a communication apparatus. The communication apparatus may be a first device (a first terminal and a second terminal), a second network element, a fourth network element, or a fifth network element. The communication apparatus has a function of implementing the first aspect to the fifth aspect. For example, the communication apparatus includes a corresponding module, unit, or means (means) for performing steps in the first aspect to the fifth aspect. The function, unit or means may be implemented by software, may be implemented by hardware, or may be implemented by hardware executing corresponding software.

In a possible design, the communication apparatus includes a processing unit and a transceiver unit. The transceiver unit may be configured to send and receive a signal, to implement communication between the communication apparatus and another apparatus. For example, the transceiver unit is configured to receive a first message. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the fifth aspect. The communication apparatus may further include one or more memories. The memory is configured to be coupled to the processor, and the memory may store a necessary computer program or instructions for implementing the functions in the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In another possible design, the communication apparatus includes a processor. The processor may be configured to be coupled to a memory. The memory may store a necessary computer program or instructions for implementing the functions in the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In another possible design, the communication apparatus includes a processor and an interface circuit. The processor is configured to: communicate with another apparatus through the interface circuit, and perform the method in any possible design or implementation of the first aspect to the fifth aspect.

It may be understood that, in the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a seventh aspect, an embodiment of this application provides a communication system. The communication system includes the first device (the first terminal and the second terminal), the first network element, the second network element, the third network element, the fourth network element, and the fifth network element.

According to an eighth aspect, this application provides a chip system. The chip system includes a processor, and may further include a memory, to implement the method according to the first aspect to the fifth aspect. The chip system may include a chip, or may include a chip and another discrete component.

According to a ninth aspect, this application further provides a computer-readable storage medium. The computer-readable storage medium stores computer-readable instructions. When the computer-readable instructions are run on a computer, the computer is enabled to perform the method according to the first aspect to the fifth aspect.

According to a tenth aspect, this application provides a computer program product including instructions. When the computer program product runs on a computer, the computer is enabled to perform methods in various embodiments of the first aspect to the fifth aspect.

For technical effect that can be achieved in the second aspect to the tenth aspect, refer to the descriptions of the technical effect that can be achieved in the corresponding possible design solutions in the first aspect. Details are not described herein again in this application.

### BRIEF DESCRIPTION OF DRAWINGS

FIG. 1 is a diagram of a communication system according to an embodiment of this application;
FIG. 2 is a diagram of a scenario of a bidirectional session;
FIG. 3 is a schematic flowchart of a communication method according to an embodiment of this application;
FIG. 4A and FIG. 4B are diagrams of a scenario of determining a second session parameter according to an embodiment of this application;
FIG. 5A and FIG. 5B are diagrams of a scenario of determining a second session parameter according to an embodiment of this application;
FIG. 6A and FIG. 6B are a schematic flowchart of a communication method according to an embodiment of this application;
FIG. 7A and FIG. 7B are a schematic flowchart of a communication method according to an embodiment of this application;
FIG. 8A and FIG. 8B are a schematic flowchart of a communication method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, reference may be made to each other, and repeated parts are not described again.

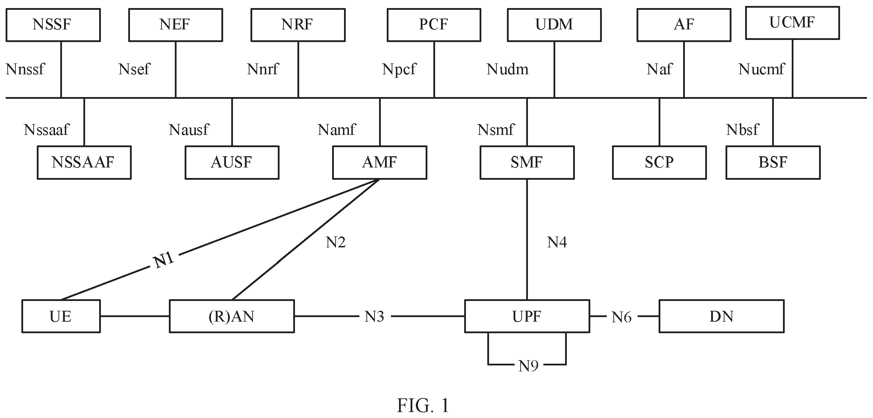

FIG. 1 is a diagram of a mobile communication network architecture. The network architecture includes a terminal, an access network device, an access and mobility management function, a session management function, a user plane function, a policy control function, a network slice selection function, a network slice specific identity authentication and authorization function, a network repository function, a network data analytics function, a unified data management function, a unified data storage function, an authentication server function, a network capability exposure function, a user equipment radio capability management function, a binding support function, an application function, and a data network (data network, DN) connected to an operator network. The terminal may access a wireless network via an access node at a current location. The terminal device may send service data to the data network and receive service data from the data network via the access network device and the user plane function.

The access and mobility management function is mainly used for attachment, mobility management, and tracking area update procedures, and the like of a terminal in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is mainly used for session management in the mobile network, for example, session setup, modification, and release. A specific function is, for example, allocating an internet protocol address to the terminal, and selecting the user plane function that provides a packet forwarding function. In the 5G communication system, the session management function may be a session management function (session management function, SMF). In the future communication system (for example, the 6G communication system), the session management function may still be an SMF, or may have another name. This is not limited in this application. This application further relates to a multicast/broadcast session management network element. The multicast/broadcast session management network element may be a multicast/broadcast session management network element (multicast/broadcast session management function, MB-SMF), and is mainly used for session management in the mobile network, for example, session setup, modification, and release.

The user plane function is mainly used to process, for example, forward and charge, user packets. In the 5G communication system, the user plane function may be a user plane function (user plane function, UPF). In the future communication system (for example, the 6G communication system), the user plane function may still be a UPF, or may have another name. This is not limited in this application.

The policy control function includes a policy control function, a charging policy control function, QoS control, and the like. In the 5G communication system, the policy control function may be a policy control function (policy control function, PCF). In the future communication system (for example, the 6G communication system), the policy control function may still be a PCF, or may have another name. This is not limited in this application.

The network slice selection function is mainly used for selecting an appropriate network slice for a terminal service. In the 5G communication system, the network slice selection function may be a network slice selection function (network slice selection function, NSSF). In the future communication system (for example, the 6G communication system), the network slice selection function may still be an NSSF, or may have another name. This is not limited in this application.

The network slice specific authentication and authorization function (network slice specific authentication and authorization function, NSSAAF) is mainly used to authenticate and authorize a terminal to access a specific network slice.

The network repository function is mainly used to provide a network function or registration and discovery a service provided by a network function. In the 5G communication system, the network repository function may be a network repository function (network repository function, NRF). In the future communication system (for example, the 6G communication system), the network repository function may still be an NRF, or may have another name. This is not limited in this application.

The network data analytics function collects data from various network functions, for example, the policy control function, the session management function, the user plane function, the access management function, and the application function (through the network capability exposure function), and performs analytics and prediction. In the 5G communication system, the network data analytics function may be a network data analytics function (network data analytics function, NWDAF). In the future communication system (for example, the 6G communication system), the network data analytics function may still be an NWDAF, or may have another name. This is not limited in this application.

The unified data management function is mainly used to manage subscription information of terminals. In the 5G communication system, the unified data management function may be a unified data management (unified data management, UDM) function. In the future communication system (for example, the 6G communication system), the unified data management function may still be a UDM function, or may have another name. This is not limited in this application.

The unified data repository function is mainly configured to store structured data information, including subscription information, policy information, and network data or service data defined in a standard format. In the 5G communication system, the unified data repository function may be a unified data repository (unified data repository, UDR) function. In the future communication system (for example, the 6G communication system), the unified data repository function may still be a UDR function, or may have another name. This is not limited in this application.

The authentication server function is mainly used to authenticate terminals. In the 5G communication system, the authentication server function may be an authentication server function (authentication server function, AUSF). In the future communication system (for example, the 6G communication system), the authentication server function may still be an AUSF, or may have another name. This is not limited in this application.

The network capability exposure function may expose a part of functions of the network to an application in a controlled manner. In the 5G communication system, the network capability exposure function may be an NEF. In the future communication system (for example, the 6G communication system), the network capability exposure function may still be an NEF, or may have another name. This is not limited in this application.

The terminal wireless capability management function is used to store and manage wireless capabilities of terminals in the network. In the 5G communication system, the user equipment radio capability management function may be a user equipment radio capability management function (user equipment radio capability management function, UCMF). In the future communication system (for example, the 6G communication system), the user equipment radio capability management function may still be a UCMF, or may have another name. This is not limited in this application.

The binding support function is used to maintain mappings between internet protocols (internet protocol, IP) addresses and service functions for interconnection between user networks. In the 5G communication system, the binding support function may be a binding support function (binding support function, BSF). In the future communication system (for example, the 6G communication system), the binding support function may still be a BSF, or may have another name. This is not limited in this application.

The application function may provide service data of various applications for a control plane function in a communication network of an operator, or obtain data information and control information of a network from a control plane function in a communication network. In the 5G communication system, the application function may be an application function (application function, AF). In the future communication system (for example, the 6G communication system), the application function may still be an AF, or may have another name. This is not limited in this application.

The data network is mainly configured to provide a data transmission service for the terminal. The data network may be a private network, for example, a local area network; or may be a public data network (public data network, PDN), for example, the internet (internet); or may be a dedicated network jointly deployed by operators, for example, a configured IP multimedia network subsystem (internet protocol multimedia network subsystem, IMS) service.

It should be noted that the function may also be referred to as a network element, a network function or a functional entity, a device, or the like. For example, the access and mobility management function may also be referred to as an access and mobility management network element, an access and mobility management network function, an access and mobility management functional entity, or the like. Names of functions are not limited in this application. A person skilled in the art may replace the names of the functions with other names to perform same functions. This falls within the protection scope of this application.

For ease of understanding embodiments of this application, the following first briefly describes terms or processing procedures in embodiments of this application.

### (1) First device

The first device includes at least two terminals and/or at least two subscriber identity modules (for example, USIM cards). For example, the first device includes a terminal 1 and a terminal 2; or the first device includes a USIM card 1 and a USIM card 2; or the first device includes a terminal 1, a terminal 2, and a terminal 3; or the first device includes a USIM card 1, a USIM card 2, and a USIM card 3. These are merely examples for description and are not specifically limited herein. Optionally, the first device includes at least two protocol stacks (stacks), the terminal 1 is replaced with a protocol stack 1, and the terminal 2 is replaced with a protocol stack 2.

In this embodiment of this application, two terminals included in the first device are used as an example for description. The two terminals may be two devices/apparatuses. Alternatively, two UEs included in the first device may be two USIMs. For example, a first UE may be a first USIM, and a second UE may be a second USIM. Alternatively, the first device is a terminal, the terminal includes two USIMs, a first UE corresponds to a first USIM, and a second UE corresponds to a second USIM. Correspondingly, in embodiments of this application, the first device may be replaced with the terminal, the UE may be replaced with the USIM, the first UE may be replaced with the first USIM, and the second UE may be replaced with the second USIM. Alternatively, the first device is a bidirectional device, the bidirectional device includes two USIMs, a first UE corresponds to a first USIM, and a second UE corresponds to a second USIM. Correspondingly, in embodiments of this application, the first device may be replaced with the bidirectional device, the UE may be replaced with the USIM, the first UE may be replaced with the first USIM, and the second UE may be replaced with the second USIM. Alternatively, the first device is a terminal, the terminal includes two protocol stacks (stacks), a first UE is replaced with a first protocol stack of the terminal, and a second UE is replaced with a second protocol stack of the terminal.

### (2) Bidirectionality

The first device includes the terminal 1 and the terminal 2. The first device may be bidirectional, that is, service data of the first device may be directed to the terminal 1 or the terminal 2 for transmission, or may be switched from transmission via the terminal 1 to transmission via the terminal 2. Alternatively, the terminal 1 and the terminal 2 belong to a same user, and service data of the user may be directed to the terminal 1 or the terminal 2 for transmission, or may be switched from transmission via the terminal 1 to transmission via the terminal 2.

### (3) Bidirectional session (also referred to as a session associated between UEs) (DualSteer session, or session for DualSteer)

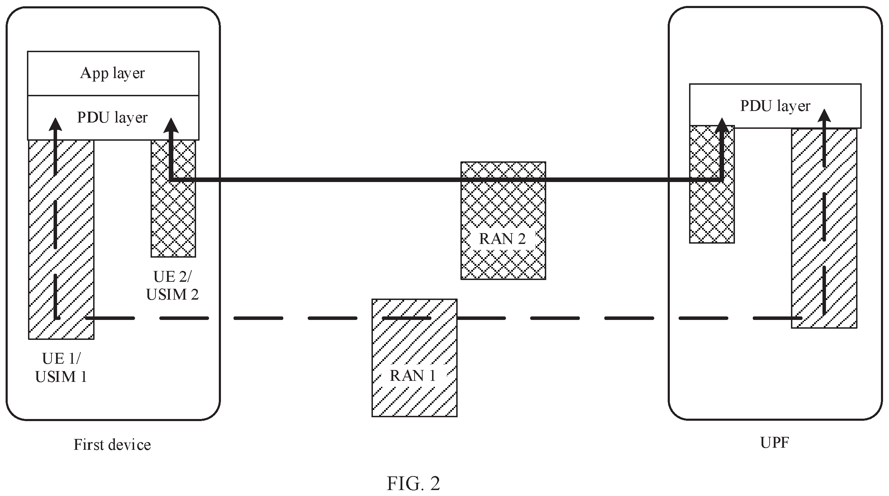

Herein, an example in which the first device includes two UEs (a UE 1 and a UE 2) or two USIM cards (a USIM card 1 and a USIM card 2) is used for description. FIG. 2 shows that a PDU session (PDU session ID #1) of the UE 1 and a PDU session (PDU session ID #2) of the UE 2 share a same IP address. The UE 1 creates the PDU session ID #1 via a RAN 1, and the UE 2 creates the PDU session ID #2 via a RAN 2. The RAN 1 and the RAN 2 are 3GPP access types (3GPP access types). The RAN 1 and the RAN 2 may have the same (or different) radio access technology type (radio access technology type, RAT Type). The RAT type may be 5G NR, 5G NR (satellite), or a 6G RAT. For example, the RAN 1 is the 5G NR, and the RAN 2 is the 6G RAT. The RAN 1 and the RAN 2 may belong to a same public land mobile network (Public Land Mobile Network, PLMN) or may belong to different PLMNs.

Before a service is switched between the UE 1 and the UE 2, service data corresponding to the IP address is transmitted based on the PDU session ID #1 of the UE 1 (that is, a PDU layer is associated with a transmission channel (UE 1-RAN 1-UPF) of the UE 1). After the service is switched between the UE 1 and the UE 2, the service data corresponding to the IP address is transmitted based on the PDU session ID #2 of the UE 2 (that is, the PDU layer is associated with a transmission channel (UE 2-RAN 2-UPF) of the UE 2). Before and after the service is switched between the UE 1 and the UE 2, a connection (for example, a socket connection) between the PDU layer and an application layer (app layer) does not change, that is, an IP address used by an application does not change, and service continuity is not affected. Further, activation of the PDU session ID #2 of the UE 2 may further trigger deactivation or release of the PDU session ID #1 of the UE 1.

Bidirectionality may indicate an attribute or a purpose of the PDU session. For example, a type of the PDU session is bidirectionality, or the PDU session is used to provide a bidirectional function. Service data carried in the PDU session may be directed to a first terminal or a second terminal.

Creation of the bidirectional PDU session can reduce a delay of service switching between different UEs and improve user service experience. In view of this, this application provides a communication method. The method may be described by using data exchange between a first terminal, a second terminal, a second network element, a fourth network element, a fifth network element, and a sixth network element as an example. The first terminal and the second terminal may be terminals or SIM cards in a first device. Alternatively, the first terminal and the second terminal may be different devices that can share an IP address. For example, a mobile phone and a vehicle of a user A are at a same spatial location (the mobile phone is located in the vehicle, or a distance between the mobile phone and the vehicle is within a distance threshold range), and the mobile phone and the vehicle may share a same IP address. In this case, the mobile phone may be understood as the first terminal, and the vehicle may be understood as the second terminal. Alternatively, a mobile phone and a tablet computer of a user A are located at a same spatial location (a distance between the mobile phone and the tablet computer is within a distance threshold range), and the mobile phone and the tablet computer may share a same IP address. In this case, the mobile phone may be understood as the first terminal, and the tablet computer may be understood as the second terminal. Whether the first terminal and the second terminal are located in a same device or in different devices is not specifically limited in this application. During specific application, another terminal may be further involved. A quantity of terminals is not limited herein in this application, provided that the terminals can share a same IP address. This application is described by using the first terminal and the second terminal as an example.

The second network element is an access management network element of the terminal. For example, the second network element is an SMF. The fourth network element and the sixth network element are configured to perform attachment, mobility management, and tracking area update procedures, and the like of a terminal in a mobile network. For example, the fourth network element is an AMF. The fifth network element is configured to manage subscription information of the terminal. For example, the fifth network element is UDM.

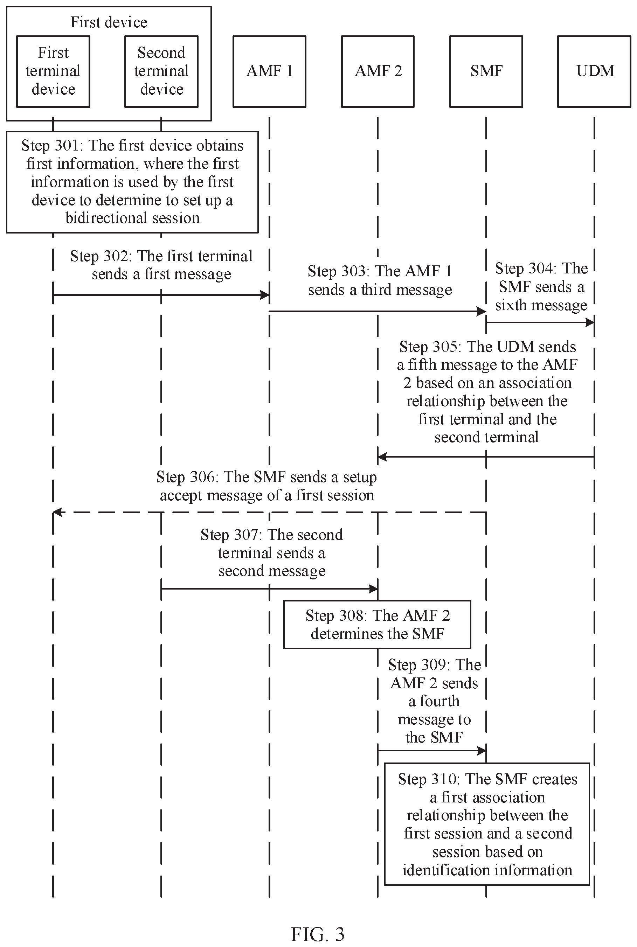

In FIG. 3, an example in which the first terminal and the second terminal are located in the first device, the second network element is the SMF, the fourth network element is an access management network element AMF 2 of the second terminal, the fifth network element is the UDM, and the sixth network element is an access management network element AMF 1 of the first terminal is used for description. FIG. 3 is described by using an example in which a session of the first terminal is switched to a session of the second terminal. During specific application, whether the session of the first terminal is switched to the session of the second terminal or the session of the second terminal is switched to the session of the first terminal is not limited. The method is performed as follows.

Step 301: A first device obtains first information, where the first information is used by the first device to determine to set up a bidirectional session.

Optionally, the first information is used to trigger the first device to set up the bidirectional session.

It should be noted that the first device may receive the first information from a first network element (for example, a policy control function). The first information is determined by the policy control function based on bidirectional capability information and/or bidirectional subscription information of the first device. For example, when the first device (the first terminal and/or the second terminal) registers with the network, the first device reports the bidirectional capability information, and the policy control function obtains the bidirectional capability information from a registration network element (for example, the AMF 1 and/or the AMF 2) of the first device to generate the first information. Alternatively, the policy control function obtains subscription information (that is, the bidirectional subscription information) of the first device, and generates the first information based on the subscription information, where the subscription information indicates that the first terminal or the second terminal allows bidirectionality. Alternatively, the policy control function obtains the bidirectional capability information from a registration network element of the first device, and generates the first information based on the bidirectional capability information and the subscription information of the first device. In addition, the first information may be understood as being obtained by either the first terminal or the second terminal in the first device, or obtained by both the first terminal and the second terminal. The first terminal and the second terminal may share the first information. How to share the first information is not specifically limited in this application.

It should be further noted that if the first terminal and the second terminal are not in the same device (that is, in the first device), the first terminal and the second terminal may separately obtain the first information.

For example, the first information may be in a route selection policy, or the first information may be bidirectional session policy information. This is not specifically limited in this application. When the first information is in a route selection policy of the first terminal (for example, UE route selection policy 1, URSP 1), the first information includes an RSD corresponding to the first service, and the RSD includes bidirectional session indication information (or referred to as a cross-UE session indication or a DualSteer session indication) and session parameters (for example, a data network name (data network name, DNN) #1 and a single network slice selection assistance information (single network slice selection assistance information, S-NSSAI) #1) of the first session. The bidirectional session indication information indicates the setup of the bidirectional session or transmission of the first service through the bidirectional session. In this application, the first information may be the route selection policy, and the route selection policy includes bidirectional session indication information corresponding to different services. When the service of the first device is triggered, the first device may query the RSD corresponding to the first service in the route selection policy to determine session indication information corresponding to the service, and determine, based on this, whether to set up the bidirectional session. In addition, the session parameter of the first session may be further obtained based on the RSD corresponding to the first service. In view of this, the first device needs to evaluate only the route selection policy, and obtain information for setting up the bidirectional session and the session parameter, thereby reducing processing complexity of the device.

The bidirectional session indication information is added to the RSD corresponding to the first service in the URSP 1 of the first terminal. The bidirectional session indication information may be indicated by a parameter, for example, DualSteer, or may be indicated in another manner. This is not specifically limited herein. In Table 1, the first service may be indicated by an application description of the first service, an identifier of the first service, or address information for transmitting the first service.

**Table 1 Example of an RSD**

| Traffic descriptor (Traffic descriptor) | Application description of a first service, identifier of the first service, or address information for transmitting the first service |
|---|---|
| RSD | Bidirectional session indication information |
| | DNN #1 and S-NSSAI #1 |

When the first information is the bidirectional session policy information, the policy information includes: service information that allows the bidirectional session, and/or allowing use of the bidirectional session. For example, the policy information includes a service 1 and a service 2, or the policy information includes that the service 1 allows the use of the bidirectional session. In this case, when the service 1 is triggered, the first device may determine, based on the policy information, to set up the bidirectional session. Alternatively, the policy information includes: allowing the use of the bidirectional session, and the first device may determine, based on the policy information, to set up the bidirectional session. In addition, the policy information may further include service information that does not allow the bidirectional session. For example, the policy information includes that the service 1 allows the use of the bidirectional session, the service 2 allows the use of the bidirectional session, and a service 3 does not allow the use of the bidirectional session. Therefore, when the service 3 is triggered, the first device may determine, based on the policy information, not to set up the bidirectional session. The allowing the use of the bidirectional session means that the first device allows the use of the bidirectional session, or means that any service of the first device allows the use of the bidirectional session.

Step 302: The first terminal sends a first message, where the first message includes a setup request message of the first session, the first session is a bidirectional session, and the first session is a session of the first terminal. Correspondingly, the AMF 1 receives the first message.

For example, the first session is the bidirectional session (or a bidirectional service is provided for the first session). The AMF 1 obtains the setup request message (for example, a PDU session setup request message) of the first session, and determines to perform bidirectionality. The first message may be a message of a new type, the first message is associated with the bidirectionality, and it may be determined, based on the first message, to perform the bidirectionality. Alternatively, the first message reuses an existing NAS message, and the NAS message carries the setup request message of the first session, so that a network element of a core network determines to perform bidirectionality. This is not specifically limited herein.

To help the AMF 1 determine that the first session is used for the bidirectionality, the first message may further include at least one of the following parameters: bidirectional session request information or a bidirectional identifier. The bidirectional identifier is generated by the first device (generated by the first terminal or the second terminal).

The bidirectional session request information may be referred to as a bidirectional session request type, and may be referred to as a DualSteer session request type. The bidirectional session request information may be indicated based on a parameter (for example, a request type). The request type indicates that setup of the first session is a request for the bidirectional session. For example, a request type 1 indicates the bidirectional session request information, and the request type 2 indicates non-bidirectional session request information. The AMF 1 determines, based on the information, that the first session is used for the bidirectionality. The bidirectional identifier may also be referred to as a bidirectional session identifier. The bidirectional identifier is generated by the first device by obtaining the first information (that is, under a prerequisite that step 301 is performed). When the first device generates the bidirectional identifier, uniqueness inside the first device needs to be ensured. The bidirectional identifier may be generated based on the bidirectional session request information and the identifier of the first device. Different first devices may generate different bidirectional identifiers. How to construct the bidirectional identifier is not specifically limited herein. In view of this, the first device generates the unique bidirectional identifier, so that the SMF associates two sessions. For example, in a case in which the first device determines to set up the bidirectional session, the first device generates the bidirectional identifier. If the first terminal and the second terminal are not in a same device, the bidirectional identifier may be generated by the first terminal or generated by the second terminal, or may be negotiated by the first terminal and the second terminal, and the first terminal and the second terminal may share the bidirectional identifier. It should be understood that the bidirectional identifier is used to associate the first session of the first terminal with a second session of the second terminal.

It should be noted that, in addition to the foregoing information, the first message may further include the identifier of the first session and the session parameters (for example, the DNN #1 and the S-NSSAI #1) of the first session. For example, the identifier of the first session and the session parameter of the first session may be carried in the setup request message of the first session. It can be learned from the description in step 301 that, if the first information is in the route selection policy of the first terminal (for example, the URSP 1), the session parameter of the first session may be obtained from the RSD corresponding to the first service, that is, the session parameter of the first session is directly determined based on the first information. If the first information is the bidirectional session policy information, the first terminal may obtain the session parameter of the first session according to the route selection policy of the first terminal, that is, use the first information as an execution condition for obtaining the session parameter of the first session, and obtain the session parameter of the first session by querying the route selection policy of the first terminal.

Step 303: The AMF 1 sends a third message, where the third message includes the setup request message of the first session and the identifier of the first session. Correspondingly, the SMF receives the third message.

For example, the first session is the bidirectional session (or the bidirectional service is provided for the first session). The SMF obtains the setup request message (for example, the PDU session setup request message) of the first session, and determines to perform the bidirectionality. The third message may be a message of a new type, the third message is associated with the bidirectionality, and it may be determined, based on the third message, to perform the bidirectionality. Alternatively, the third message is a create session management context request (create session management context request) message, and the message carries the setup request message of the first session, so that the network element of the core network determines to perform the bidirectionality. This is not specifically limited herein.

Optionally, the third message may further include the bidirectional identifier, and/or the bidirectional session request information. The bidirectional identifier may be generated by the first device (generated by the first terminal or the second terminal). For example, the AMF 1 selects, based on the bidirectional identifier or the bidirectional session request information, an SMF supporting a bidirectional function, and the SMF manages the first session.

Optionally, the third message further carries an identity of the first terminal, for example, a SUPI 1. In view of this, the SMF may determine which terminal device requests to set up the bidirectional session.

In addition, the third message further carries the session parameter of the first session. The AMF 1 selects the SMF based on the session parameter of the first session.

Step 304: The SMF sends a sixth message, where the sixth message includes the identifier of the first session, bidirectional information, and an identifier of the SMF, the SMF is used to manage the first session, and the bidirectional information is the bidirectional identifier, or a bidirectional session type, or indicates that the session is used for the bidirectionality. Correspondingly, the UDM receives the sixth message.

That the SMF is used to manage the first session may be understood as that the SMF is used to manage the first session of the first terminal.

The bidirectional session type indicates that the first session is used for the bidirectionality or the first session provides the bidirectional service. The identifier of the SMF may be address information of the SMF or fully qualified domain name (fully qualified domain name, FQDN) information of the SMF.

For example, if the first session is the bidirectional session (or provides the bidirectional service for the first session), the UDM obtains the bidirectional information, and determines to perform the bidirectionality. The sixth message may be a message of a new type, the sixth message is associated with the bidirectionality, and it may be determined, based on the sixth message, to perform the bidirectionality. Alternatively, the sixth message is a user equipment context management registration (UE context management registration) message, and the message carries the bidirectional information, so that the network element of the core network determines to perform the bidirectionality. This is not specifically limited herein.

During specific application, the sixth message further carries the identity of the first terminal, for example, the SUPI 1.

Step 305: The UDM sends a fifth message to the AMF 2 based on an association relationship between the first terminal and the second terminal, where the fifth message includes the identifier of the SMF. Correspondingly, the AMF 2 receives the fifth message.

For example, the fifth message is a user equipment context management update (UE context management update) message.

It should be noted that the AMF 1 registers with the UDM that the AMF 1 is responsible for managing the first terminal, and reports the identity of the first terminal to the UDM, for example, the SUPI 1. Optionally, the AMF 1 further reports the bidirectional capability information of the first terminal to the UDM (for example, the first terminal supports a bidirectional operation, or the first terminal supports creation of the bidirectional session, or the first terminal supports a cross-terminal session). The AMF 2 registers with the UDM that the AMF 2 is responsible for managing the second terminal, and reports an identity of the second terminal to the UDM, for example, an SUPI 2. Optionally, the AMF 2 further reports the bidirectional capability information of the second terminal to the UDM (for example, the second terminal supports the bidirectional operation, or the second terminal supports the creation of the bidirectional session, or the second terminal supports the cross-terminal session).

The UDM stores the association relationship between the first terminal and the second terminal, that is, an association between the SUPI 1 and the SUPI 2. It should be understood that when an operator creates subscription data for a user of the first device, the association between the first terminal of the user and the second terminal exists. For example, the subscription data of the first terminal includes the identifier (SUPI 2) of the second terminal. For another example, subscription data of the second terminal includes the identifier (SUPI 1) of the first terminal. For another example, the UDM stores subscription data of the first terminal, stores subscription data of the second terminal, and stores the association between the SUPI 1 and the SUPI 2.

Optionally, the association relationship between the first terminal and the second terminal may be replaced with that the first terminal and the second terminal allow the bidirectionality (or the first terminal and the second terminal are in a bidirectional mode). Correspondingly, the UDM stores information indicating that the first terminal and the second terminal allow the bidirectionality (or the UDM stores that the first terminal and the second terminal are in the bidirectional mode), and the UDM sends the fifth message to the AMF 2 based on the information indicating that the first terminal and the second terminal allow the bidirectionality (or the first terminal and the second terminal are in the bidirectional mode). It is understood that when the UDM determines the information indicating that the first terminal and the second terminal allow the bidirectionality (or the first terminal and the second terminal are in the bidirectional mode), the UDM sends the fifth message to the AMF 2. Alternatively, the UDM sends the fifth message to the AMF 2 based on the association relationship between the first terminal and the second terminal and the information indicating that the first terminal and the second terminal allow the bidirectionality (or the first terminal and the second terminal are in the bidirectional mode). For example, before step 305, the UDM receives a request that the first terminal and the second terminal perform the bidirectionality, the UDM determines that the first terminal and the second terminal allow the bidirectionality, and the UDM stores that the first terminal and the second terminal allow the bidirectionality (or the first terminal and the second terminal are in the bidirectional mode).

For example, if the bidirectional information is the bidirectional identifier in step 304, the fifth message further includes the bidirectional identifier, and the AMF 2 may store a third association relationship between the bidirectional identifier and the identifier of the SMF, so that after receiving the bidirectional identifier from the second terminal, the AMF 2 can determine the SMF based on the bidirectional identifier and the third association relationship. Optionally, the AMF 2 stores, in a context of the second terminal, the third association relationship between the bidirectional identifier and the identifier of the SMF.

For example, in step 304, if the bidirectional information is the bidirectional session type or indicates that the session is used for the bidirectionality, the fifth message further includes the identifier of the first session, and the AMF 2 may store a fourth association relationship between the identifier of the first session and the identifier of the SMF, so that after receiving the identifier of the first session from the second terminal, the AMF 2 can determine the SMF based on the identifier of the first session and the fourth association relationship. Optionally, the AMF 2 stores, in the context of the second terminal, the fourth association relationship between the identifier of the first session and the identifier of the SMF.

In addition, the UDM may send the fifth message to the AMF 2 based on the association relationship between the first terminal and the second terminal and the bidirectional information. In other words, sending of the fifth message is triggered only when the sixth message includes the bidirectional information (or understood as a case in which the first session is the bidirectional session).

Optionally, the fifth message may further include the bidirectional session type or indicate that the session is used for the bidirectionality, so that the AMF 2 determines that the SMF can manage the bidirectional session.

Optionally, the fifth message may further include the identity of the first terminal. The AMF 2 may store the identity of the first terminal, and an association relationship between the identifier of the first session and the identifier of the SMF, so that after receiving the identity of the first terminal and the identifier of the first session from the second terminal, the AMF 2 can determine the SMF based on the identity of the first terminal, the identifier of the first session, and the association relationship.

Optionally, the fifth message may further include the identity of the first terminal. The AMF 2 may store an association relationship between the identity of the first terminal and the identifier of the first session (that is, indicating that the first session is the session of the first terminal), so that after determining the SMF, the AMF 2 sends the identity of the first terminal, the identifier of the first session, the identity of the second terminal, and the identifier of the second session to the SMF. In this way, the SMF 2 can determine an association between the first session of the first terminal and the second session of the second terminal.

Step 307: The second terminal sends a second message, where the second message includes a setup request message of the second session, a session parameter of the second session is related to the session parameter of the first session, the second session is a bidirectional session, and the second session is the session of the second terminal. Correspondingly, the AMF 2 receives the second message.

For example, the second session is the bidirectional session (or a bidirectional service is provided for the second session). The AMF 2 obtains the setup request message (for example, a PDU session setup request message) of the second session, and determines to perform the bidirectionality. The second message may be a message of a new type, the second message is associated with the bidirectionality, and it may be determined, based on the second message, to perform the bidirectionality. Alternatively, the second message reuses an existing NAS message, and the NAS message carries the setup request message of the second session, so that the network element of the core network determines to perform the bidirectionality. This is not specifically limited herein.

To help the AMF 2 determine that the second session is used for the bidirectionality, the second message may further include at least one of the following parameters: the bidirectional session request information, the identifier of the first session, or the bidirectional identifier.

The bidirectional session request information may be understood based on the description in step 302. Details are not described herein again. In step 307, the bidirectional identifier may be generated by the first device by obtaining the first information (that is, under the prerequisite that step 301 is performed). The bidirectional identifier may be generated based on the bidirectional session request information and the identifier of the first device. Different first devices may generate different bidirectional identifiers. How to construct the bidirectional identifier is not specifically limited herein. If the first terminal and the second terminal are not in the same device, the bidirectional identifier may be generated by the first terminal or generated by the second terminal, and the first terminal and the second terminal may share the bidirectional identifier. If the first message does not carry the bidirectional identifier, the bidirectional identifier in the second message may be alternatively a bidirectional identifier received by the first device (for example, a bidirectional identifier received from the SMF), and the bidirectional identifier is allocated by the SMF. For example, the SMF may generate the bidirectional identifier based on the bidirectional session request information carried in the first message.

In addition, because the first terminal has sent a bidirectional session setup request message (that is, the setup request message of the first session) through the first message, the second terminal may add the identifier of the first session to the second message, so that the AMF 2 determines to perform the bidirectionality.

It should be noted that, in addition to the foregoing information, the second message may further include the identifier of the second session and the session parameter of the second session. The identifier of the second session is different from the identifier of the first session. When the first device allocates session identifiers, uniqueness of the session identifier of the first terminal and the session identifier of the second terminal can be ensured. It can be learned from the description in step 301 that, if the first information is in the route selection policy of the first terminal (for example, the URSP 1), the second terminal and the first terminal perform the bidirectionality, and the first device or the second terminal may determine the session parameter of the second session based on the session parameter of the first session. If the first information is in the route selection policy of the first terminal (for example, the URSP 1), the second terminal and the first terminal perform the bidirectionality, the first terminal may determine the session parameter of the first session according to the route selection policy of the first terminal, and the second terminal may also determine the session parameter of the second session according to a route selection policy of the second terminal. For example, session parameters of the second session may be the same as the session parameters of the first session. For example, the session parameters of the first session include the DNN #1 and the S-NSSAI #1. The session parameters of the second session include the DNN #1 and the S-NSSAI #1. The session parameters of the second session may be further determined based on the session parameters of the first session. For example, the session parameters of the first session include the DNN #1 and the S-NSSAI #1. The session parameters of the second session include the DNN #1, the S-NSSAI #1, and an S-NSSAI #2 of a roaming PLMN. When the second terminal is roaming, the second terminal may determine the S-NSSAI #2 of the roaming PLMN based on the S-NSSAI #1.

Optionally, that the session parameter of the second session is related to the session parameter of the first session may be replaced with that the session parameter of the second session is the same as the session parameter of the first session, or the session parameter of the second session is determined based on the session parameter of the first session.

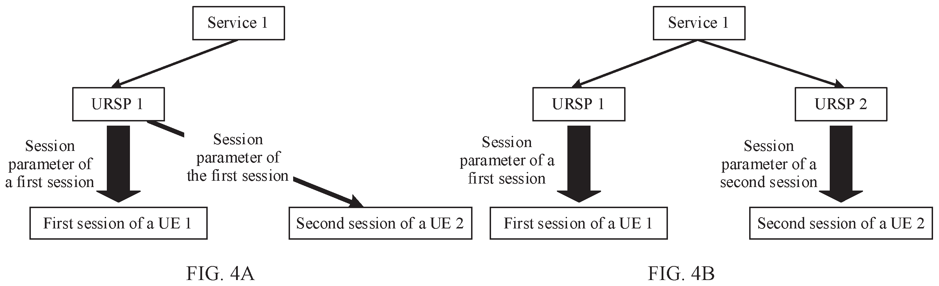

Refer to FIG. 4A. When the service 1 in the first device is triggered, the first device determines, based on the bidirectional session indication information in the URSP 1 of the first terminal, that the first terminal and the second terminal perform the bidirectionality (or set up the bidirectional session). In addition, the first device further determines the session parameter of the first session based on the URSP 1 (one-to-one correspondence with the first terminal) of the first terminal, and the first device creates the first session based on the session parameter of the first session. The first device may create the second session of the second terminal based on the session parameter of the first session. Refer to FIG. 4B. When the service 1 in the first device is triggered, the first device determines, based on the bidirectional session indication information in the URSP 1 of the first terminal, that the first terminal and the second terminal perform the bidirectionality (or set up the bidirectional session). In addition, the first device further determines the session parameter of the first session based on the URSP 1 of the first terminal, and the first terminal creates the first session based on the session parameter of the first session. The first device determines the session parameter of the second session based on a URSP 2 (one-to-one correspondence with the second terminal) of the second terminal, and the second terminal creates the second session based on the session parameter of the second session. In FIG. 4B, the session parameter of the first session is the same as the session parameter of the second session.

It can be learned from the description in step 301 that, if the first information is the bidirectional session policy information, the second terminal and the first terminal perform the bidirectionality, and the first device may determine the session parameter of the second session based on the session parameter of the first session. Alternatively, the first device may determine the session parameter of the second session according to the route selection policy of the second terminal.

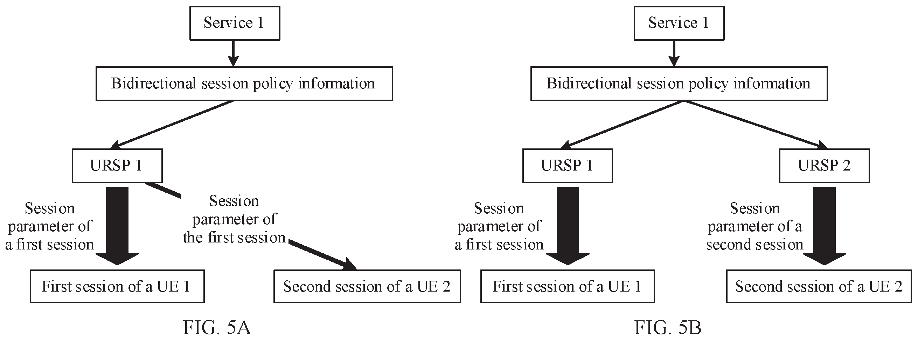

Refer to FIG. 5A. When the service 1 in the first device is triggered, the first device determines, based on the bidirectional session policy information, that the first terminal and the second terminal perform the bidirectionality (or set up the bidirectional session). The first device determines the session parameter of the first session based on the URSP 1 (one-to-one correspondence with the first terminal) of the first terminal, and the first terminal creates the first session based on the session parameter of the first session. The second terminal may create the second session of the second terminal based on the session parameter of the first session. It should be understood that the first device first evaluates the bidirectional session policy information, evaluates the URSP 1, and does not need to evaluate the URSP 2. Refer to FIG. 5B. When the service 1 in the first device is triggered, the first device determines, based on the bidirectional session policy information, that the first terminal and the second terminal perform the bidirectionality (or set up the bidirectional session). The first device determines the session parameter of the first session based on the URSP 1 of the first terminal, and the first terminal creates the first session based on the session parameter of the first session. The first device determines the session parameter of the second session based on a URSP 2 (one-to-one correspondence with the second terminal) of the second terminal, and the second terminal creates the second session based on the session parameter of the second session. In FIG. 5B, the session parameter of the first session is the same as the session parameter of the second session. It should be understood that the first device first evaluates the bidirectional session policy information, and separately evaluates the URSP 1 and the URSP 2.

Optionally, before step 307 is performed, step 306 is further performed.

Step 306: The SMF sends a setup accept message of the first session.

Based on the setup accept message of the first session, the first device may determine that the first session may perform the bidirectionality (that is, may be used as the bidirectional session). Step 307 is performed only when the first session is successfully set up, or when the first session is allowed to perform the bidirectionality, or when the first session is allowed to be used for the bidirectionality. The setup accept message of the first session may include the bidirectional identifier, the IP address of the first device, and the bidirectional session accept information (for example, the first session is allowed to perform the bidirectionality, or the first session is allowed to be used for the bidirectionality). For example, step 307 is performed only when the setup accept message of the first session includes the bidirectional session accept information.

Step 308: The AMF 2 determines the SMF.

It should be noted that if the second message includes the bidirectional identifier, the AMF 2 may determine the SMF based on the bidirectional identifier. For example, the AMF 2 may determine the SMF based on the bidirectional identifier and the third association relationship (an association relationship between the bidirectional identifier and the identifier of the SMF) stored by the AMF 2 after receiving the fifth message. If the second message includes the identifier of the first session, the AMF 2 may determine the SMF based on the identifier of the first session. For example, the AMF 2 may determine the SMF based on the identifier of the first session and the fourth association relationship (an association relationship between the identifier of the first session and the identifier of the SMF) stored by the AMF 2 after receiving the fifth message.

In addition, when the second message includes the bidirectional session request information, the AMF 2 determines the SMF based on the bidirectional identifier or the identifier of the first session only when the setup request message of the second session is the bidirectional session request information. Otherwise, the AMF 2 selects the SMF based on the session parameters (for example, the DNN #1 and the S-NSSAI #1) of the second session.

Step 309: The AMF 2 sends a fourth message to the SMF, where the fourth message includes the setup request message of the second session. Correspondingly, the SMF receives the fourth message.

In addition, the fourth message further includes the identity of the second terminal.

For example, the second session is the bidirectional session (or the bidirectional service is provided for the second session). The AMF 2 obtains the setup request message (for example, the PDU session setup request message) of the second session, and determines to perform the bidirectionality. The fourth message may be a message of a new type, the fourth message is associated with the bidirectionality, and it may be determined, based on the second message, to perform the bidirectionality. Alternatively, the fourth message is a session management context creation request message, and the NAS message carries the setup request message of the second session, so that the network element of the core network determines to perform the bidirectionality. This is not specifically limited herein.

If the second terminal is in a roaming network, the AMF 2 sends the fourth message to a third network element (for example, a V-SMF that manages the second session in the roaming network of the second terminal). The fourth message includes the identifier of the SMF, so that the third network element determines the SMF based on the identifier of the SMF.

In addition, the fourth message further includes the identifier of the second session and identification information, the identification information is the bidirectional identifier or the identifier of the first session, and the bidirectional identifier is related to the first session, so that the first association relationship between the first session and the second session is determined based on the identification information. It should be further noted that, if the identification information is the bidirectional identifier, the third message sent by the AMF 1 to the SMF also includes the bidirectional identifier. In this case, the bidirectional identifier is generated by the first device (or the first terminal or the second terminal). If the identification information is the bidirectional identifier, the third message further includes a bidirectional session request message (excluding the bidirectional identifier), and the SMF may generate the bidirectional identifier based on the bidirectional session request information, and add the bidirectional identifier to the sent setup accept message of the first session, so that the second terminal can obtain the bidirectional identifier. The second message sent by the second terminal to the AMF 2 includes the bidirectional identifier. In view of this, the fourth message sent by the AMF 2 to the SMF includes the bidirectional identifier.

Optionally, the SMF may store a second association relationship between the bidirectional identifier and the first session. For example, the bidirectional identifier is stored in a context of the first session. When the fourth message includes the bidirectional identifier and the identifier of the second session, the SMF may create the first association relationship between the first session and the second session based on the bidirectional identifier, that is, performing the following step 310. For example, the SMF may search for the second association relationship based on the bidirectional identifier, determine the identifier of the first session based on the second association relationship, and create the first association relationship based on this. This is not specifically limited herein in this application.

If the identification information is the identifier of the first session, when performing the following step 310, the SMF may create the first association relationship based on the identifier of the first session and the identifier of the second session. This is not specifically limited herein in this application. For example, the fourth message further includes the identity of the first terminal, the identifier of the first session, the identity of the second terminal, and the identifier of the second session. In this way, the SMF 2 can determine the association between the first session of the first terminal and the second session of the second terminal.

Step 310: The SMF creates the first association relationship between the first session and the second session based on the identification information.

For example, when the first session is associated with the second session, the first session and the second session may share a same N4 session ID and/or a same IP address.

In view of this, in this application, the association between the first session of the first terminal and the second session of the second terminal can be created, to ensure that when service data of the user or service data of the first device is switched between different terminals, an IP address for transmitting the service data remains unchanged, and the first device or the terminal does not need to set up a connection to a server again, thereby reducing a switching delay or switching interruption time, improving data processing efficiency, and ensuring user service experience.

It should be noted that the foregoing message/information transmission between the terminal and the network element, and between the network elements may be direct transmission, or may be indirect transmission via another network element or device. This is not specifically limited in this application. For example, that the first terminal transmits the first message to the AMF 1 may be understood as that the first terminal transmits the first message to the AMF 1 via the RAN 1, or may be understood as that the first terminal directly transmits the first message to the AMF 1. That the fifth message is transmitted between the AMF 2 and the UDM may be understood as that the UDM transmits the third message to the AMF 1 via the SMF, or the UDM directly transmits the third message to the AMF 1. This is merely an example.

The following describes the solutions of this application based on data exchange of the UE 1 (namely, the first terminal), the UE 2 (namely, the second terminal), the AMF 1 (namely, the sixth network element), the AMF 2 (namely, the fourth network element), the SMF (namely, the second network element), and the UDM (namely, the fifth network element) (or the PCF). The solutions are described herein based on different cases. In addition, for the following message that is the same as that in the embodiment in FIG. 3, refer to the description about the message in the related steps in FIG. 3. For example, for the first message, refer to step 302 in FIG. 3. Details are not described herein again. Details are as follows.

Case 1: The UE 1 and/or the UE 2 generate/generates the bidirectional identifier.

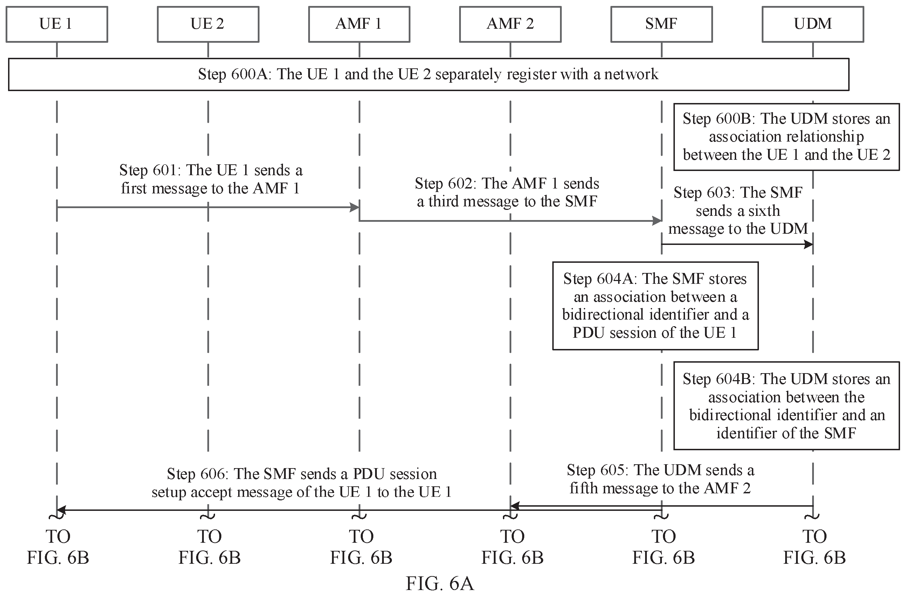

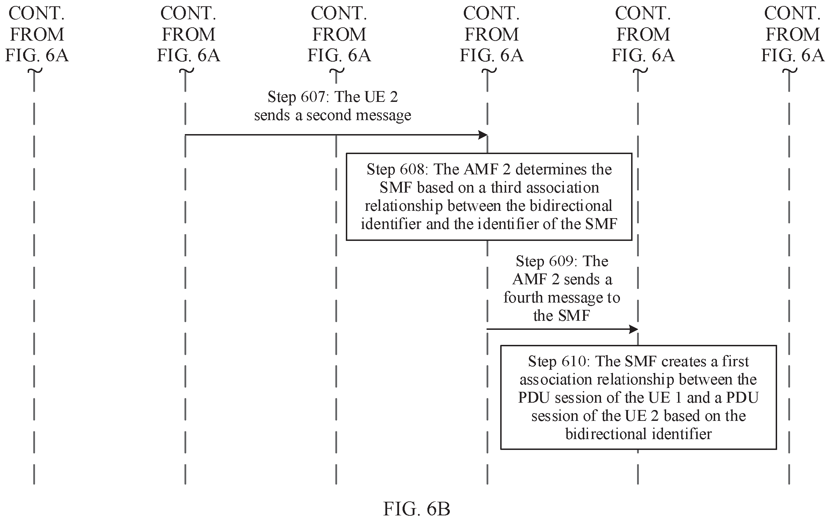

Refer to FIG. 6A and FIG. 6B. The following steps are performed.

Step 600A: The UE 1 and the UE 2 separately register with a network.

The AMF 1 is responsible for access and mobility management of the UE 1, and registration management of the UE 1. The AMF 1 stores the SUPI 1 (the identity of the UE 1), and the AMF 1 registers with the UDM that the AMF 1 is responsible for the UE 1. The AMF 1 reports the SUPI 1 to the UDM. The AMF 1 reports the bidirectional capability information of the UE 1 to the UDM (for example, the UE 1 supports the bidirectional operation, or the UE 1 supports the creation of the bidirectional session, or the UE 1 supports the cross-UE session).

The AMF 2 is responsible for access and mobility management of the UE 2, and registration management of the UE 2. The AMF 2 stores the SUPI 2 (the identity of the UE 2), and the AMF 2 registers with the UDM that the AMF 2 is responsible for the UE 2. The AMF 2 reports the SUPI 2 to the UDM. The AMF 2 reports the bidirectional capability information of the UE 2 to the UDM (for example, the UE 2 supports the bidirectional operation, or the UE 2 supports the creation of the bidirectional session, or the UE 2 supports the cross-UE session).

Step 600B: The UDM stores the association relationship between the UE 1 and the UE 2,
for example, the association between the SUPI 1 and the SUPI 2. It should be understood that, in a process in which an operator registers the UEs, the association between the two UEs exists (for example, both the UE 1 and the UE 2 belong to a same user). Therefore, the UDM may store the association relationship between the SUPI 1 and the SUPI 2.

Step 601: The UE 1 sends the first message to the AMF 1, where the first message includes a PDU session setup request message of the UE 1 (that is, the setup request message of the first session) and the bidirectional identifier. Correspondingly, the AMF 1 receives the first message.

It should be noted that the bidirectional identifier in step 601 is generated after the UE 1 obtains the first information. For details about how to obtain the first information, refer to step 301 in FIG. 3. Details are not described herein again.

Optionally, the first message may be the NAS message. The first message may further include an identifier of a PDU session 1 (that is, the identifier of the first session) and session parameters (a DNN and an S-NSSAI) of the PDU session 1 (that is, the session parameters of the first session). The PDU session setup request message of the UE 1 also includes the identifier of the PDU session 1.

Optionally, the first message may further include the bidirectional session request information.

In addition, the PDU session setup request message of the UE 1 may also include the bidirectional identifier.

After receiving the first message, the AMF 1 may obtain the identity SUPI 1 of the UE 1. For example, the AMF 1 searches for registration information of the UE 1 to determine the SUPI 1.

When performing step 601, the UE 1 may forward the first message to the AMF 1 via the RAN 1.

Step 601 may be understood with reference to step 302. Details are not described herein again.

Step 602: The AMF 1 sends the third message to the SMF, where the third message includes the PDU session setup request message of the UE 1 and the bidirectional identifier. Correspondingly, the SMF receives the third message.

When the first message includes the identifier of the PDU session 1 and the session parameter of the PDU session 1, the third message may further include the identifier of the PDU session and the session parameter of the PDU session. The third message may alternatively be the create session management context request (create session management context request) message, and the message carries the setup request message of the first session, so that the network element of the core network determines to perform the bidirectionality.

When the first message includes the bidirectional session request information, the third message may further include the bidirectional session request information. In addition, the third message may further include the identity SUPI 1 of the UE 1.

Optionally, the third message further carries the identity of the first terminal, for example, the SUPI 1. In view of this, the SMF may determine which terminal device requests to set up the bidirectional session.

Optionally, the AMF 1 selects, based on the bidirectional identifier or the bidirectional session request information, an SMF supporting the bidirectionality.

In addition, the AMF 1 performs step 603 only when determining, according to step 600A, that the UE 1 supports the bidirectional operation; otherwise, the AMF 1 sends a reject message to the UE 1.

Step 602 may be understood with reference to step 303. Details are not described herein again.

Step 603: The SMF sends the sixth message to the UDM, where the sixth message includes the bidirectional identifier and the identifier of the SMF. Correspondingly, the UDM receives the sixth message.

When the sixth message includes the identifier of the PDU session, the session parameter of the PDU session, and the SUPI 1, the sixth message may further include the identifier of the PDU session 1, the session parameter of the PDU session 1, and the SUPI 1.

When the third message includes the bidirectional session request information, the sixth message may further include the bidirectional session request information.

In addition, the SMF performs step 603 only when determining, according to step 600A, that the UE 1 supports the bidirectional operation; otherwise, the SMF sends a reject message to the UE 1.

Step 604A: The SMF stores an association (that is, the second association relationship) between the bidirectional identifier and the PDU session of the UE 1.

For example, the second association relationship may indicate the SUPI 1, and an association between the identifier of the PDU session 1 and the bidirectional identifier.

In addition, the SMF further selects the UPF for the PDU session of the UE 1, allocates an IP address to the UE 1, and allocates the N4 session ID to the PDU session of the UE 1. The N4 session ID is used for interaction between the SMF and the UPF.

Step 604B: The UDM stores the association between the bidirectional identifier and the identifier of the SMF.

For example, the UDM may store the SUPI 1, the identifier of the PDU session 1, the session parameter of the PDU session 1, and the association between the identifier of the SMF and the bidirectional identifier.

Step 605: The UDM sends the fifth message to the AMF 2, where the fifth message includes the identifier of the SMF. Correspondingly, the AMF 2 receives the fifth message.

For example, the UDM may determine the UE 2 based on the association relationship between the UE 1 and the UE 2 in step 600B, and determine the AMF 2 based on the registration information of the UE 2 in step 600A.

Optionally, the fifth message further includes the bidirectional identifier and the bidirectional session type. The AMF 2 may store the third association relationship between the identifier of the SMF and the bidirectional identifier. The third association relationship may indicate the SUPI 2 (the identity of the UE 2), and an association between the identifier of the SMF and the bidirectional identifier. For example, the AMF 2 may store the third association relationship in a context of the UE 2.

In addition, the UDM sends only PDU session information of the UE 1 related to the bidirectionality to the AMF 2, for example, the identifier of the SMF and the bidirectional identifier. If the UE 1 does not support the bidirectionality, step 605 may not be performed.

Step 605 may be understood with reference to step 305. Details are not described herein again.

Step 606: The SMF sends a PDU session setup accept message of the UE 1 to the UE 1.

For example, the PDU session setup accept message of the UE 1 includes the IP address allocated by the SMF to the UE 1. Optionally, the setup accept message includes DualSteer session allowed, indicating that the PDU session 1 of the UE 1 is allowed to be used as the bidirectional session. Optionally, the setup accept message further includes the bidirectional session request information.

Optionally, the following step 607 is performed only when the PDU session setup accept message of the UE 1 in step 606 is that the PDU session 1 of the UE 1 is allowed to be used as the bidirectional session.

In addition, after step 606 is performed, another processing procedure (N3 setup, DRB configuration, and the like) of a PDU session of the UE 2 is further included. For understanding, refer to the conventional technology. Details are not described herein.

Step 607: The UE 2 sends the second message, where the second message includes a PDU session setup request message of the UE 2 (that is, the setup request message of the second session) and the bidirectional identifier (the same as the bidirectional identifier in step 601). Correspondingly, the AMF 2 receives the second message.

Optionally, the second message may be the NAS message. The first message may further include an identifier of the PDU session 2 (namely, the identifier of the second session) and the session parameter of the PDU session 1 (namely, the session parameter of the first session, where it can be learned from the foregoing description in step 301 that the session parameter of the second session is related to the session parameter of the first session, and it is assumed herein that the session parameter of the first session is the same as the session parameter of the second session). The PDU session setup request message of the UE 2 also includes the identifier of the PDU session 2.

Optionally, the second message may further include the bidirectional session request information.

In addition, the PDU session setup request message of the UE 2 may also include the bidirectional identifier.

After receiving the second message, the AMF 2 may obtain the identity SUPI 2 of the UE 2. For example, the AMF 2 searches for the registration information of the UE 2 to determine the SUPI 2.

When performing step 607, the UE 2 may forward the second message to the AMF 2 via the RAN 2.

Step 607 may be understood with reference to step 307. Details are not described herein again.

Step 608: The AMF 2 determines the SMF based on the third association relationship between the bidirectional identifier and the identifier of the SMF.

For example, the AMF 2 may search the context of the UE 2 for the identifier of the SMF.

Step 609: The AMF 2 sends the fourth message to the SMF, where the fourth message includes the PDU session setup request message of the UE 2 and the bidirectional identifier. Correspondingly, the SMF receives the fourth message.

If the UE 2 is in a roaming network, the AMF 2 sends the fourth message to the third network element (managing the second session in the roaming network of the UE 2). The fourth message includes the identifier of the SMF, so that the third network element determines the SMF based on the identifier of the SMF.

Optionally, the fourth message further includes the identifier of the PDU session 2, the SUPI 2, the bidirectional session request information, and the session parameter of the PDU session 1.

For understanding, refer to the description of step 309. Details are not described herein.

Step 610: The SMF creates a first association relationship between the PDU session of the UE 1 and the PDU session of the UE 2 based on the bidirectional identifier.

For example, step 609 includes the identifier of the PDU session 2, or the SMF parses the PDU session setup request message of the UE 2 to obtain the identifier of the PDU session 2. The SMF searches, based on the bidirectional identifier received in step 609, for the second association relationship stored in step 604A, to obtain the identifier of the PDU session 1, and creates the first association relationship between the identifier of the PDU session 1 and the identifier of the PDU session 2.

The PDU session of the UE 2 and the PDU session of the UE 1 share the same N4 session ID and IP address. The SMF does not need to select a new UPF for the PDU session of the UE 2, allocate the IP address to the UE 2, or allocate the N4 session ID to the PDU session of the UE 2.

Optionally, the SMF may send a PDU session setup accept message of the UE 2 to the UE 2. Optionally, the PDU session setup accept message of the UE 2 includes DualSteer session allowed, indicating that the PDU session 2 of the UE 2 is allowed to be used as the bidirectional session.

In view of this, both the PDU session of the UE 1 and the PDU session of the UE 2 carry the same bidirectional identifier when used for request, so that the network associates the identifier of the PDU session 1 of the UE 1 with the identifier of the PDU session 2 of the UE 2.

Case 2: The SMF generates the bidirectional identifier.

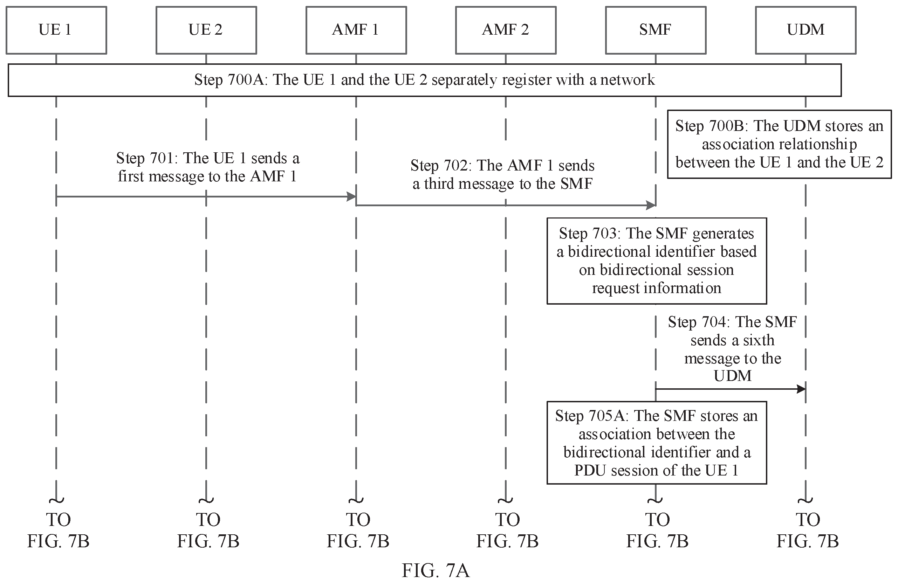

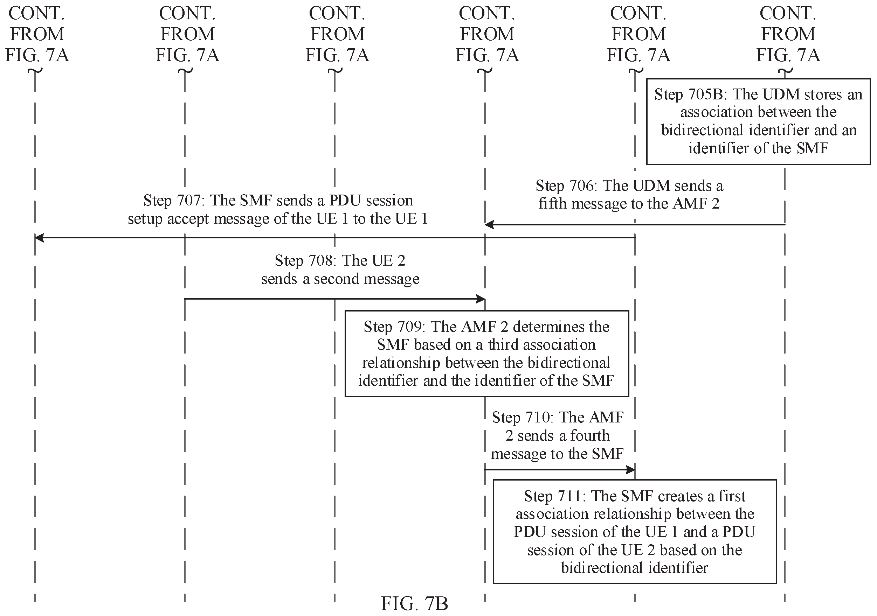

Refer to FIG. 7A and FIG. 7B. The following steps are performed.

An execution process of step 700A is the same as that of step 600A. Details are not described herein. For details, refer to the description.

An execution process of step 700B is the same as that of step 600B. Details are not described herein. For details, refer to the description.

Step 701: The UE 1 sends the first message to the AMF 1, where the first message includes a PDU session setup request message of the UE 1 (that is, the setup request message of the first session) and the bidirectional session request information. Correspondingly, the AMF 1 receives the first message.

Optionally, the first message may be the NAS message. The first message may further include an identifier of a PDU session 1 (that is, the identifier of the first session) and session parameters (a DNN and an S-NSSAI) of the PDU session 1 (that is, the session parameters of the first session). The PDU session setup request message of the UE 1 also includes the identifier of the PDU session 1.

Optionally, the first message may further include the bidirectional session request information.

After receiving the first message, the AMF 1 may obtain the identity SUPI 1 of the UE 1. For example, the AMF 1 searches for registration information of the UE 1 to determine the SUPI 1.

When performing step 701, the UE 1 may forward the first message to the AMF 1 via the RAN 1.

Step 701 may be understood with reference to step 302. Details are not described herein again.

Step 702: The AMF 1 sends the third message to the SMF, where the third message includes the PDU session setup request message of the UE 1 and the bidirectional session request information. Correspondingly, the SMF receives the third message.

When the first message includes the identifier of the PDU session 1 and the session parameter of the PDU session 1, the third message may further include the identifier of the PDU session and the session parameter of the PDU session.

In addition, the third message may further include the identity SUPI 1 of the UE 1. Optionally, the AMF 1 selects, based on the bidirectional session request information, an SMF supporting the bidirectionality.

In addition, the AMF 1 performs step 703 only when determining, according to step 700A, that the UE 1 supports the bidirectional operation; otherwise, the AMF 1 sends a reject message to the UE 1.

Step 702 may be understood with reference to step 303. Details are not described herein again.

Step 703: The SMF generates the bidirectional identifier based on the bidirectional session request information.

Optionally, the SMF obtains, from the UDM or the PCF, whether the PDU session of the UE 1 is allowed to be the bidirectional session. The SMF generates the bidirectional identifier only when determining that the PDU session of the UE 1 is allowed to be the bidirectional session.

An execution process of step 704 is the same as that of step 603. Details are not described herein. For details, refer to the description.

An execution process of step 705A is the same as that of step 604A. Details are not described herein. For details, refer to the description.

An execution process of step 705B is the same as that of step 604B. Details are not described herein. For details, refer to the description.

An execution process of step 706 is the same as that of step 605. Details are not described herein. For details, refer to the description.

Step 707: The SMF sends a PDU session setup accept message of the UE 1 to the UE 1.

For example, the setup accept message includes an IP address allocated by the SMF to the UE 1 and the bidirectional identifier. Optionally, the setup accept message includes DualSteer session allowed, indicating that the PDU session 1 of the UE 1 is allowed to be used as the bidirectional session. Optionally, the setup accept message further includes the bidirectional session request information.

Optionally, the following step 708 is performed only when the setup accept message in step 707 is that the PDU session 1 of the UE 1 is allowed to be used as the bidirectional session.

Step 708: The UE 2 sends the second message, where the second message includes a PDU session setup request message of the UE 2 (that is, the setup request message of the second session) and the bidirectional identifier (the same as the bidirectional identifier in step 703, and the bidirectional identifier is carried in step 707). Correspondingly, the AMF 2 receives the second message.

Optionally, the second message may be the NAS message. The first message may further include an identifier of the PDU session 2 (namely, the identifier of the second session) and the session parameter of the PDU session 1 (namely, the session parameter of the first session, where it can be learned from the foregoing description in step 301 that the session parameter of the second session is related to the session parameter of the first session, and it is assumed herein that the session parameter of the first session is related to the session parameter of the second session). The PDU session setup request message of the UE 2 also includes the identifier of the PDU session 2.

Optionally, the second message may further include the bidirectional session request information.

In addition, the PDU session setup request message of the UE 2 may also include the bidirectional identifier.

After receiving the second message, the AMF 2 may obtain the identity SUPI 2 of the UE 2. For example, the AMF 2 searches for registration information of the UE 2 to determine the SUPI 2.

When performing step 708, the UE 2 may forward the second message to the AMF 2 via the RAN 2.

Step 708 may be understood with reference to step 307. Details are not described herein again.

Step 709: The AMF 2 determines the SMF based on the third association relationship between the bidirectional identifier and the identifier of the SMF.

For example, the AMF 2 may search a context of the UE 2 for the identifier of the SMF.

Step 710: The AMF 2 sends the fourth message to the SMF, where the fourth message includes the PDU session setup request message of the UE 2 and the bidirectional identifier. Correspondingly, the SMF receives the fourth message.

If the UE 2 is in a roaming network, the AMF 2 sends the fourth message to the third network element (managing the second session in the roaming network of the UE 2). The fourth message includes the identifier of the SMF, so that the third network element determines the SMF based on the identifier of the SMF.

Optionally, the fourth message further includes the identifier of the PDU session 2, the SUPI 2, the bidirectional session request information, and the session parameter of the PDU session 1.

Step 711: The SMF creates a first association relationship between the PDU session of the UE 1 and the PDU session of the UE 2 based on the bidirectional identifier.

For example, step 710 includes the identifier of the PDU session 2, or the SMF parses the PDU session setup request message of the UE 2 to obtain the identifier of the PDU session 2. The SMF searches, based on the bidirectional identifier received in step 710, for the second association relationship stored in step 604A, to obtain the identifier of the PDU session 1, and creates the first association relationship between the identifier of the PDU session 1 and the identifier of the PDU session 2.

The PDU session of the UE 2 and the PDU session of the UE 1 share the same N4 session ID and IP address. The SMF does not need to select a new UPF for the PDU session of the UE 2, allocate the IP address to the UE 2, or allocate the N4 session ID to the PDU session of the UE 2.

Optionally, the SMF may send a PDU session setup accept message of the UE 2 to the UE 2. Optionally, the PDU session setup accept message of the UE 2 includes DualSteer session allowed, indicating that the PDU session 2 of the UE 2 is allowed to be used as the bidirectional session.

In view of this, the SMF generates the bidirectional identifier when the PDU session of the UE 1 is used for request, and the PDU session of the UE 2 carries the bidirectional identifier when used for request, so that the network associates the identifier of the PDU session 1 of the UE 1 with the identifier of the PDU session 2 of the UE 2.

Case 3: The bidirectional flag is not generated.

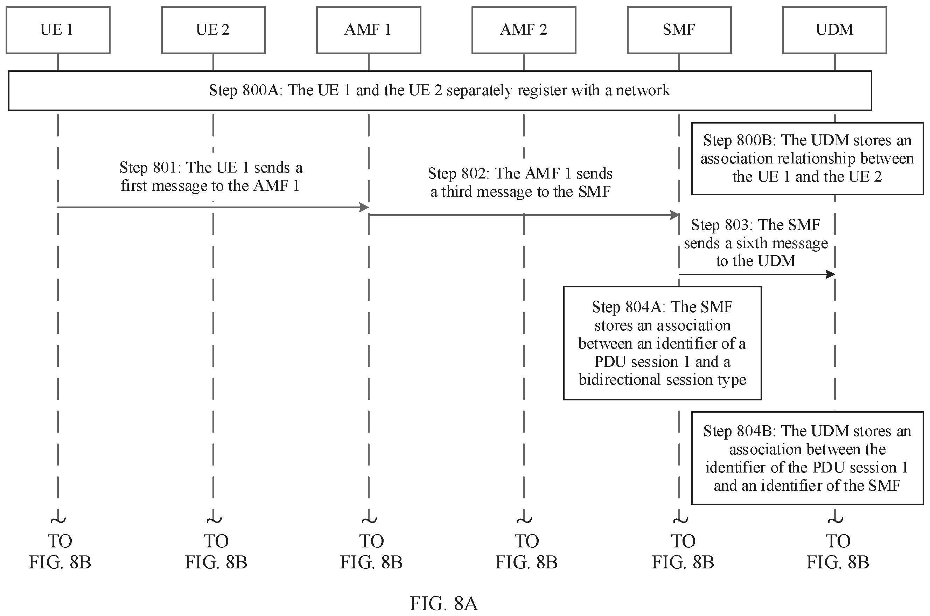

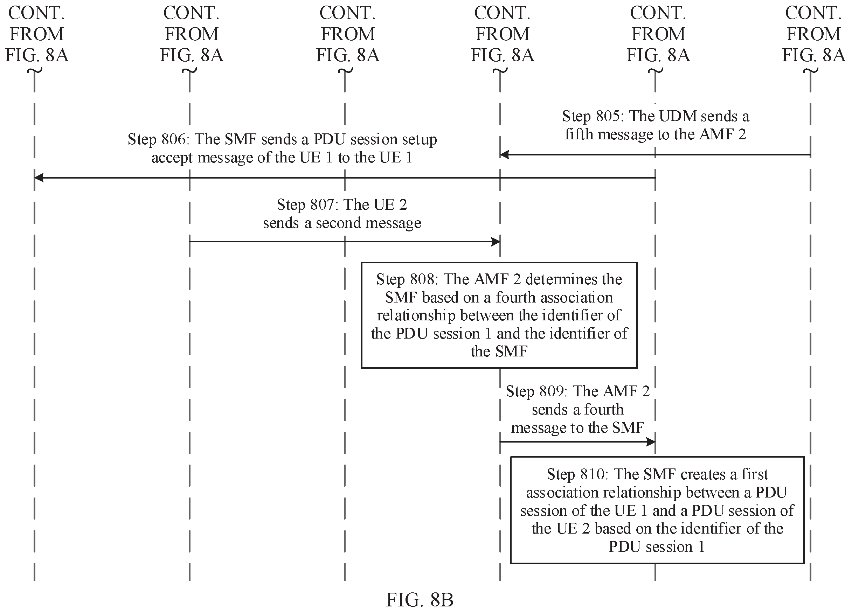

Refer to FIG. 8A and FIG. 8B. The following steps are performed.

An execution process of step 800A is the same as that of step 600A. Details are not described herein. For details, refer to the description.

An execution process of step 800B is the same as that of step 600B. Details are not described herein. For details, refer to the description.

Step 801: The UE 1 sends the first message to the AMF 1, where the first message includes a PDU session setup request message of the UE 1 (that is, the setup request message of the first session), an identifier of a PDU session 1 (namely, the identifier of the first session), and the bidirectional session request information. Correspondingly, the AMF 1 receives the first message.

Optionally, the first message may be the NAS message. The first message may further include session parameters (a DNN and an S-NSSAI) of the PDU session 1 (that is, the session parameters of the first session). The PDU session setup request message of the UE 1 also includes the identifier of the PDU session 1.

Optionally, the first message may further include the bidirectional session request information.

After receiving the first message, the AMF 1 may obtain the identity SUPI 1 of the UE 1. For example, the AMF 1 searches for registration information of the UE 1 to determine the SUPI 1.

When performing step 801, the UE 1 may forward the first message to the AMF 1 via the RAN 1.

Step 802: The AMF 1 sends the third message to the SMF, where the third message includes the PDU session setup request message of the UE 1, the identifier of the PDU session 1, and the bidirectional session request information. Correspondingly, the SMF receives the third message.

When the first message includes the session parameter of the PDU session 1, the third message may further include the identifier of the PDU session and the session parameter of the PDU session.

In addition, the third message may further include the identity SUPI 1 of the UE 1. Optionally, the AMF 1 selects, based on the bidirectional session request information, an SMF supporting the bidirectionality.

In addition, the AMF 1 performs step 803 only when determining, according to step 800A, that the UE 1 supports the bidirectional operation; otherwise, the AMF 1 sends a reject message to the UE 1.

Step 803: The SMF sends the sixth message to the UDM, where the sixth message includes the identifier of the SMF, the bidirectional session type, and the identifier of the PDU session 1. Correspondingly, the UDM receives the sixth message.

When the sixth message includes the identifier of the PDU session 1, the session parameter of the PDU session, and the SUPI 1, the sixth message may further include the session parameter of the PDU session 1 and the SUPI 1.

In addition, the SMF performs step 803 only when determining, according to step 800A, that the UE 1 supports the bidirectional operation; otherwise, the SMF sends a reject message to the UE 1.

Step 804A: The SMF stores an association between the identifier of the PDU session 1 and the bidirectional session type, that is, the PDU session 1 is used for the bidirectionality.

For example, the second association relationship may indicate the SUPI 1, and an association between the identifier of the PDU session 1 and the bidirectional session type.

In addition, the SMF further selects the UPF for the PDU session of the UE 1, allocates an IP address to the UE 1, and allocates the N4 session ID to the PDU session of the UE 1. The N4 session ID is used for interaction between the SMF and the UPF.

Step 804B: The UDM stores an association (that is, the fourth association relationship) between the identifier of the PDU session 1 and the identifier of the SMF.

For example, the UDM may store the SUPI 1, the identifier of the PDU session 1, the session parameter of the PDU session 1, and the association between the identifier of the SMF and the bidirectionality.

Step 805. The UDM sends the fifth message to the AMF 2, where the fifth message includes the identifier of the SMF and the identifier of the PDU session 1. Correspondingly, the AMF 2 receives the fifth message.

For example, the UDM may determine the UE 2 based on the association relationship between the UE 1 and the UE 2 in step 600B, and determine the AMF 2 based on the registration information of the UE 2 in step 600A.

Optionally, the fifth message further includes the bidirectional session type. The AMF 2 may store the fourth association relationship between the identifier of the SMF and the identifier of the PDU session 1. The fourth association relationship may indicate the SUPI 2 (the identity of the UE 2), and an association between the identifier of the SMF and the identifier of the PDU session 1. For example, the AMF 2 may store the fourth association relationship in a context of the UE 2.

In addition, the UDM sends only PDU session information of the UE 1 related to the bidirectionality to the AMF 2, for example, the identifier of the SMF. If the UE 1 does not support the bidirectionality, step 805 may not be performed.

Step 806: The SMF sends a PDU session setup accept message of the UE 1 to the UE 1.

For example, the setup accept message includes the IP address allocated by the SMF to the UE 1. Optionally, the setup accept message includes DualSteer session allowed, indicating that the PDU session 1 of the UE 1 is allowed to be used as the bidirectional session. Optionally, the setup accept message further includes the bidirectional session accept information.

Optionally, the following step 807 is performed only when the setup accept message in step 806 is that the PDU session 1 of the UE 1 is allowed to be used as the bidirectional session.

In addition, after step 806 is performed, another processing procedure (N3 setup, DRB configuration, and the like) of a PDU session of the UE 2 is further included. For understanding, refer to the conventional technology. Details are not described herein.

Step 807: The UE 2 sends the second message, where the second message includes a PDU session setup request message of the UE 2 (that is, the setup request message of the second session), the identifier of the PDU session 1, and the identifier of the PDU session 2 (that is, the identifier of the second session). Correspondingly, the AMF 2 receives the second message.

Optionally, the second message may be the NAS message. The second message may further include the session parameter of the PDU session 1 (namely, the session parameter of the first session, where it can be learned from the foregoing description in step 301 that the session parameter of the second session is related to the session parameter of the first session, and it is assumed herein that the session parameter of the first session is related to the session parameter of the second session). The PDU session setup request message of the UE 2 also includes the identifier of the PDU session 2.

Optionally, the second message may further include the bidirectional session request information.

After receiving the second message, the AMF 2 may obtain the identity SUPI 2 of the UE 2. For example, the AMF 2 searches for the registration information of the UE 2 to determine the SUPI 2.

When performing step 807, the UE 2 may forward the second message to the AMF 2 via the RAN 2.

Step 808: The AMF 2 determines the SMF based on the fourth association relationship between the identifier of the PDU session 1 and the identifier of the SMF.

For example, the AMF 2 may search a context of the UE 2 for the identifier of the SMF.

Step 809: The AMF 2 sends the fourth message to the SMF, where the fourth message includes the PDU session setup request message of the UE 2 and the identifier of the PDU session 1. Correspondingly, the SMF receives the fourth message.

If the UE 2 is in a roaming network, the AMF 2 sends the fourth message to the third network element (managing the second session in the roaming network of the UE 2). The fourth message includes the identifier of the SMF, so that the third network element determines the SMF based on the identifier of the SMF.

Optionally, the fourth message further includes the identifier of the PDU session 2, the SUPI 2, the bidirectional session request information, and the session parameter of the PDU session 1.

Step 810: The SMF creates a first association relationship between the PDU session of the UE 1 and the PDU session of the UE 2 based on the identifier of the PDU session 1.

For example, step 809 includes the identifier of the PDU session 2, or the SMF parses the PDU session setup request message of the UE 2 to obtain the identifier of the PDU session 2. The SMF creates the first association relationship between the identifier of the PDU session 1 and the identifier of the PDU session 2.

The PDU session of the UE 2 and the PDU session of the UE 1 share the same N4 session ID and IP address. The SMF does not need to select a new UPF for the PDU session of the UE 2, allocate the IP address to the UE 2, or allocate the N4 session ID to the PDU session of the UE 2.

Optionally, the SMF may send a PDU session setup accept message of the UE 2 to the UE 2. Optionally, the PDU session setup accept message of the UE 2 includes DualSteer session allowed, indicating that the PDU session 2 of the UE 2 is allowed to be used as the bidirectional session.

In view of this, both the PDU session of the UE 1 and the PDU session of the UE 2 are carried when used for request.

In view of this, when the bidirectional identifier is not constructed, the PDU session identifier of the UE 1 may be reused to associate the identifier of the PDU session 1 of the UE 1 with the identifier of the PDU session 2 of the UE 2, thereby reducing data processing complexity.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

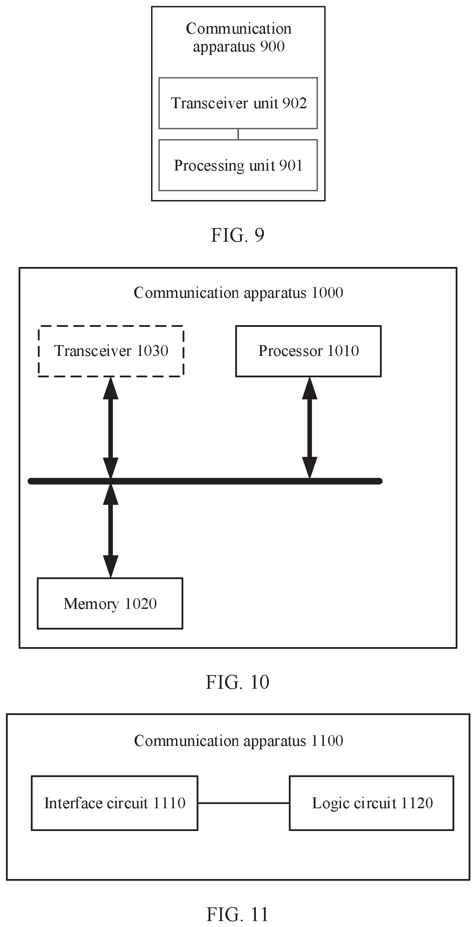

When an integrated unit is used, FIG. 9 is a possible example block diagram of a communication apparatus according to an embodiment of this application. As shown in FIG. 9, the communication apparatus 900 may include a processing unit 901 and a transceiver unit 902. The processing unit 901 is configured to control and manage an action of the communication apparatus 900. The transceiver unit 902 is configured to support communication between the communication apparatus 900 and another device. Optionally, the transceiver unit 902 may include a receiving unit and/or a sending unit, configured to perform a receiving operation and a sending operation, respectively. Optionally, the communication apparatus 900 may further include a storage unit, configured to store program code and/or data of the communication apparatus 900. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. For example, the apparatus may be the first device (the first terminal and the second terminal), the first network element, the second network element, the third network element, the fourth network element, and the fifth network element.

In an embodiment, the communication apparatus 900 is the first device. The processing unit 901 is configured to obtain first information. The first information is used by the first device to determine to set up a bidirectional session. The transceiver unit 902 of the first terminal sends a first message. The first message includes a setup request message of a first session, the first session is a bidirectional session, and the first session is a session of the first terminal. The transceiver unit 902 of the second terminal sends a second message. The second message includes a setup request message of a second session, a session parameter of the second session is related to a session parameter of the first session, the second session is a bidirectional session, and the second session is a session of the second terminal.

In an optional manner, the first information includes an RSD corresponding to a first service, the RSD includes bidirectional session indication information and the session parameter of the first session, the bidirectional session indication information indicates the setup of the bidirectional session, and the first information is in a route selection policy of the first terminal.

In an optional manner, the first information is bidirectional session policy information, and the processing unit 901 of the first terminal is configured to determine the session parameter of the first session according to the route selection policy of the first terminal.

In an optional manner, the policy information includes: service information that allows the bidirectional session, and/or allowing use of the bidirectional session.

In an optional manner, the transceiver unit 902 (which may be of the first terminal or may be of the second terminal) is configured to receive the first information from the first network element. The first information is determined based on bidirectional capability information and/or bidirectional subscription information of the first device.

In an optional manner, the processing unit 901 of the second terminal is configured to determine the session parameter of the second session based on the session parameter of the first session.

In an optional manner, after the first device obtains the first information, the processing unit 901 of the first terminal is configured to determine the session parameter of the first session according to the route selection policy of the first terminal; and the processing unit 901 of the second terminal is configured to determine the session parameter of the second session according to a route selection policy of the second terminal.

In an optional manner, before the second terminal sends the second message, the transceiver unit 902 of the first terminal further receives a setup accept message of the first session.

In an optional manner, the first message further includes at least one of the following parameters:
bidirectional session request information or a bidirectional identifier. The bidirectional identifier is generated by the first device.

In an optional manner, the second message further includes at least one of the following parameters: the bidirectional session request information, an identifier of the first session, or the bidirectional identifier.

In an optional manner, the bidirectional identifier in the second message is generated by the first device; or the first device receives the bidirectional identifier, the bidirectional identifier is allocated by the second network element, and the second network element is configured to manage the first session.

In still another embodiment, the communication apparatus 900 is the second network element. The transceiver unit 902 is configured to: receive a third message, where the third message includes a setup request message of a first session and an identifier of the first session, the first session is a bidirectional session, and the first session is a session of a first terminal; and receive a fourth message, where the fourth message includes a setup request message of a second session, an identifier of the second session, and identification information, the second session is a bidirectional session, the second session is a session of a second terminal, the identification information is the bidirectional identifier or the identifier of the first session, and the bidirectional identifier is related to the first session. The processing unit 901 is configured to create a first association relationship between the first session and the second session based on the identification information.

In an optional manner, the identification information is the bidirectional identifier, the third message further includes the bidirectional identifier, and the bidirectional identifier is generated by the first terminal or the second terminal.

In an optional manner, the identification information is the bidirectional identifier, and the third message further includes bidirectional session request information. The processing unit 901 is further configured to generate the bidirectional identifier based on the bidirectional session request information. The transceiver unit 902 is further configured to send a setup accept message of the first session, where the setup accept message includes the bidirectional identifier.

In an optional manner, the processing unit 901 is configured to store a second association relationship between the bidirectional identifier and the first session.

In an optional manner, when the identification information is the bidirectional identifier, and the third message further includes the bidirectional identifier, the processing unit 901 is configured to create the first association relationship between the first session and the second session based on the bidirectional identifier.

In an optional manner, the identification information is the identifier of the first session, and the processing unit 901 is configured to create the first association relationship between the first session and the second session based on the identifier of the first session and the identifier of the second session.

In an optional manner, the second network element further sends a sixth message. The sixth message includes the identifier of the first session, bidirectional information, and an identifier of the second network element, the second network element is configured to manage the first session, and the bidirectional information is the bidirectional identifier or a bidirectional session type.

In still another embodiment, the communication apparatus 900 is the fourth network element. The transceiver unit 902 is configured to: receive a fifth message, where the fifth message includes an identifier of the second network element and a bidirectional identifier, the second network element is configured to manage a first session, the bidirectional identifier is related to the first session, and the first session is a session of a first terminal; and receive a second message, where the second message includes a setup request message of a second session and the bidirectional identifier, and the second session is a session of the second terminal. The processing unit 901 is configured to determine the second network element based on the bidirectional identifier, where the second network element is further configured to manage the second session. The transceiver unit 902 is further configured to: send a fourth message to the second network element, where the fourth message includes the setup request message of the second session; or send the fourth message to the third network element, where the fourth message includes the setup request message of the second session and the identifier of the second network element, and the third network element is configured to manage the second session in a roaming network of the second terminal.

In an optional manner, after the fourth network element receives the fifth message, the processing unit 901 is further configured to store a third association relationship between the identifier of the second network element and the bidirectional identifier.

In an optional manner, the processing unit 901 is further configured to determine the second network element based on the bidirectional identifier and the third association relationship.

In an optional manner, the second message further includes bidirectional session request information. When the setup request message of the second session is the bidirectional session request information, the processing unit 901 is further configured to determine the second network element based on the bidirectional identifier.

In an optional manner, the fifth message further includes a bidirectional session type.

In an optional manner, the fourth message further includes an identifier of the second session and identification information, the identification information is the bidirectional identifier or the identifier of the first session, and the bidirectional identifier is related to the first session.

In still another embodiment, the communication apparatus 900 is the fourth network element. The transceiver unit 902 is configured to: receive a fifth message, where the fifth message includes an identifier of a second network element and an identifier of a first session, the second network element is configured to manage the first session, and the first session is a session of a first terminal; and receive a second message, where the second message includes a setup request message of a second session and an identifier of the first session, and the second session is a session of the second terminal. The processing unit 901 is configured to determine the second network element based on the identifier of the first session, where the second network element is further configured to manage the second session. The transceiver unit 902 is further configured to: send a fourth message to the second network element, where the fourth message includes the setup request message of the second session; or send the fourth message to a third network element, where the fourth message includes the setup request message of the second session and the identifier of the second network element, and the third network element is configured to manage the second session in a roaming network of the second terminal.

In an optional manner, after the fourth network element receives the fifth message, the processing unit 901 is further configured to store a fourth association relationship between the identifier of the second network element and the identifier of the first session.

In an optional manner, the processing unit 901 is further configured to determine the second network element based on the identifier of the first session and the fourth association relationship.

In an optional manner, the second message further includes bidirectional session request information. When the setup request message of the second session is the bidirectional session request information, the processing unit 901 is further configured to determine the second network element based on the identifier of the first session.

In an optional manner, the fifth message further includes a bidirectional session type.

In an optional manner, the fourth message further includes an identifier of the second session and identification information, the identification information is the bidirectional identifier or the identifier of the first session, and the bidirectional identifier is related to the first session.

In an embodiment, the communication apparatus 900 is the fifth network element. The transceiver unit 902 is configured to receive a sixth message. The sixth message includes an identifier of a first session, bidirectional information, and an identifier of a second network element, the first session is a session of the first terminal, the second network element is configured to manage the first session, and the bidirectional information is a bidirectional identifier or a bidirectional session type. The processing unit 901 is configured to send a fifth message to a fourth network element based on an association relationship between the first terminal and the second terminal. The fifth message includes an identifier of the second network element, and the fourth network element is an access management network element of the second terminal.

In an optional manner, when the bidirectional information is the bidirectional identifier, the fifth message further includes the bidirectional identifier; or when the bidirectional information is the bidirectional session type, the fifth message further includes the identifier of the first session.

In an optional manner, the processing unit 901 is configured to send the fifth message to the fourth network element based on the association relationship between the first terminal and the second terminal and the bidirectional information.

In an optional manner, the fifth message further includes the bidirectional session type.

FIG. 10 shows a communication apparatus 1000 further provided in this application. The communication apparatus 1000 may be a chip or a chip system. The communication apparatus may be located in a device in any one of the foregoing method embodiments, for example, the access network device or the first core network device, to perform an action corresponding to the device.

Optionally, the chip system may include a chip, or may include a chip and another discrete component.

The communication apparatus 1000 includes a processor 1010.

The processor 1010 is configured to execute a computer program stored in a memory 1020, to implement an action of each device in any one of the foregoing method embodiments.

The communication apparatus 1000 may further include the memory 1020, configured to store the computer program.

Optionally, the memory 1020 is coupled to the processor 1010. The coupling may be an indirect coupling or a communication connection between apparatuses, units, or modules in an electrical form, a mechanical form, or another form, and is used for information exchange between the apparatuses, the units, or the modules. Optionally, the memory 1020 and the processor 1010 are integrated together.

There may be one or more processors 1010 and one or more memories 1020. This is not limited.

Optionally, during actual application, the communication apparatus 1000 may include or may not include a transceiver 1030. A dashed box is used as an example in the figure. The communication apparatus 1000 may exchange information with another device via the transceiver 1030. The transceiver 1030 may be a circuit, a bus, a transceiver, or any other apparatus that may be configured to exchange information.

In a possible implementation, the communication apparatus 1000 may be the access network device or the first core network device in the foregoing method embodiments.

In embodiments of this application, a specific connection medium between the transceiver 1030, the processor 1010, and the memory 1020 is not limited. In embodiments of this application, the memory 1020, the processor 1010, and the transceiver 1030 are connected through a bus in FIG. 10. The bus is represented in a bold line in FIG. 10. A connection manner between other components is merely an example for description, and does not constitute a limitation. The bus may be classified into an address bus, a data bus, a control bus, and the like. For ease of representation, only one thick line represents the bus in FIG. 10, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 11. An embodiment of this application further provides another communication apparatus 1100, including an interface circuit 1110 and a logic circuit 1120. The interface circuit 1110 may be understood as an input/output interface, and may be configured to perform sending and receiving steps of each device in any one of the foregoing method embodiments. The logic circuit 1120 may be configured to run code or instructions to perform the method performed by each device in any one of the foregoing embodiments. Details are not described again.

According to the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, for example, a USB flash drive, a removable hard disk drive, a read-only memory, a random access memory, a magnetic disk, or an optical disc.

According to the foregoing embodiments, an embodiment of this application provides a communication system. The communication system includes the first device (the first terminal and the second terminal), the first network element, the second network element, the third network element, the fourth network element, the fifth network element, and the like mentioned in any one of the foregoing method embodiments, and may be used to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, applied to a first device, wherein the first device comprises a first terminal and a second terminal, and the method comprises:
obtaining first information, wherein the first information is used by the first device to determine to set up a bidirectional session;
sending a first message, wherein the first message comprises a setup request message of a first session, the first session is a bidirectional session, and the first session is a session of the first terminal; and
sending a second message, wherein the second message comprises a setup request message of a second session, a session parameter of the second session is related to a session parameter of the first session, the second session is a bidirectional session, and the second session is a session of the second terminal.

2. The method according to claim 1, wherein the first information comprises a route selection descriptor corresponding to a first service, the route selection descriptor comprises the bidirectional session indication information and the session parameter of the first session, the bidirectional session indication information indicates the setup of the bidirectional session, and the first information is in a route selection policy of the first terminal.

3. The method according to claim 1, wherein the first information is the bidirectional session policy information, and the method further comprises:
determining the session parameter of the first session according to the route selection policy of the first terminal.

4. The method according to claim 3, wherein the policy information comprises: service information that allows the bidirectional session, and/or allowing use of the bidirectional session.

5. The method according to any one of claims 1 to 4, wherein the obtaining the first information comprises:
receiving the first information from a first network element, wherein the first information is determined based on bidirectional capability information and/or bidirectional subscription information of the first device.

6. The method according to any one of claims 1 to 5, wherein the method further comprises:
determining the session parameter of the second session based on the session parameter of the first session.

7. The method according to any one of claims 1 to 5, wherein the method further comprises:
determining the session parameter of the first session according to the route selection policy of the first terminal; and
determining the session parameter of the second session according to a route selection policy of the second terminal.

8. The method according to any one of claims 1 to 7, wherein before the sending the second message, the method further comprises:
receiving a setup accept message of the first session.

9. The method according to any one of claims 1 to 8, wherein the first message further comprises at least one of the following parameters:
the bidirectional session request information or the bidirectional identifier, wherein the bidirectional identifier is generated by the first device.

10. The method according to any one of claims 1 to 9, wherein the second message further comprises at least one of the following parameters:
the bidirectional session request information, an identifier of the first session, or the bidirectional identifier.

11. The method according to claim 10, wherein
the bidirectional identifier is generated by the first device; or
the bidirectional identifier is received, the bidirectional identifier is allocated by a second network element, and the second network element is configured to manage the first session.

12. A communication method, applied to a second network element, wherein the method comprises:
receiving a third message, wherein the third message comprises a setup request message of a first session and an identifier of the first session, the first session is a bidirectional session, and the first session is a session of a first terminal;
receiving a fourth message, wherein the fourth message comprises a setup request message of a second session, an identifier of the second session, and identification information, the second session is a bidirectional session, the second session is a session of a second terminal, the identification information is the bidirectional identifier or the identifier of the first session, and the bidirectional identifier is related to the first session; and
creating a first association relationship between the first session and the second session based on the identification information.

13. The method according to claim 12, wherein the identification information is the bidirectional identifier, the third message further comprises the bidirectional identifier, and the bidirectional identifier is generated by the first terminal or the second terminal.

14. The method according to claim 12, wherein the identification information is the bidirectional identifier, the third message further comprises the bidirectional session request information, and the method further comprises:
generating the bidirectional identifier based on the bidirectional session request information; and
sending a setup accept message of the first session, wherein the setup accept message comprises the bidirectional identifier.

15. The method according to claim 13 or 14, wherein the method further comprises:
storing a second association relationship between the bidirectional identifier and the first session.

16. The method according to any one of claims 13 to 15, wherein the creating the first association relationship between the first session and the second session based on the identification information comprises:
creating the first association relationship between the first session and the second session based on the bidirectional identifier.

17. The method according to claim 12, wherein the identification information is the identifier of the first session, and the creating the first association relationship between the first session and the second session based on the identification information comprises:
creating the first association relationship between the first session and the second session based on the identifier of the first session and the identifier of the second session.

18. The method according to any one of claims 12 to 17, wherein the method further comprises:
sending a sixth message, wherein the sixth message comprises the identifier of the first session, bidirectional information, and an identifier of the second network element, the second network element is configured to manage the first session, and the bidirectional information is the bidirectional identifier or the bidirectional session type.

19. A communication method, applied to a fourth network element, wherein the method comprises:
receiving a fifth message, wherein the fifth message comprises an identifier of a second network element and a bidirectional identifier, the second network element is configured to manage a first session, the bidirectional identifier is related to the first session, and the first session is a session of a first terminal;
receiving a second message, wherein the second message comprises a setup request message of a second session and the bidirectional identifier, and the second session is a session of a second terminal;
determining the second network element based on the bidirectional identifier, wherein the second network element is further configured to manage the second session; and
sending a fourth message to the second network element, wherein the fourth message comprises the setup request message of the second session; or
sending the fourth message to a third network element, wherein the fourth message comprises the setup request message of the second session and the identifier of the second network element, and the third network element is configured to manage the second session in a roaming network of the second terminal.

20. The method according to claim 19, wherein after the receiving the fifth message, the method further comprises:
storing a third association relationship between the identifier of the second network element and the bidirectional identifier.

21. The method according to claim 20, wherein the determining the second network element based on the bidirectional identifier comprises:
determining the second network element based on the bidirectional identifier and the third association relationship.

22. The method according to any one of claims 19 to 21, wherein the second message further comprises the bidirectional session request information, and the method further comprises:
when the setup request message of the second session is the bidirectional session request information, determining the second network element based on the bidirectional identifier.

23. The method according to any one of claims 19 to 22, wherein the fifth message further comprises the bidirectional session type.

24. The method according to any one of claims 19 to 23, wherein the fourth message further comprises an identifier of the second session and identification information, the identification information is the bidirectional identifier or an identifier of the first session, and the bidirectional identifier is related to the first session.

25. A communication method, applied to a fourth network element, wherein the method comprises:
receiving a fifth message, wherein the fifth message comprises an identifier of a second network element and an identifier of a first session, the second network element is configured to manage the first session, and the first session is a session of a first terminal;
receiving a second message, wherein the second message comprises a setup request message of a second session and an identifier of the first session, and the second session is a session of a second terminal;
determining the second network element based on the identifier of the first session, wherein the second network element is further configured to manage the second session; and
sending a fourth message to the second network element, wherein the fourth message comprises the setup request message of the second session; or
sending the fourth message to a third network element, wherein the fourth message comprises the setup request message of the second session and the identifier of the second network element, and the third network element is configured to manage the second session in a roaming network of the second terminal.

26. The method according to claim 25, wherein after the receiving the fifth message, the method further comprises:
storing a fourth association relationship between the identifier of the second network element and the identifier of the first session.

27. The method according to claim 26, wherein the determining the second network element based on the identifier of the first session comprises:
determining the second network element based on the identifier of the first session and the fourth association relationship.

28. The method according to any one of claims 25 to 27, wherein the second message further comprises the bidirectional session request information, and the method further comprises:
when the setup request message of the second session is the bidirectional session request information, determining the second network element based on the identifier of the first session.

29. The method according to any one of claims 25 to 28, wherein the fifth message further comprises a bidirectional session type.

30. The method according to any one of claims 25 to 29, wherein the fourth message further comprises an identifier of the second session and identification information, the identification information is the bidirectional identifier or the identifier of the first session, and the bidirectional identifier is related to the first session.

31. A communication method, applied to a fifth network element, wherein the method comprises:
receiving a sixth message, wherein the sixth message comprises an identifier of a first session, bidirectional information, and an identifier of a second network element, the first session is a session of a first terminal, the second network element is configured to manage the first session, and the bidirectional information is the bidirectional identifier or the bidirectional session type; and
sending a fifth message to a fourth network element based on an association relationship between the first terminal and a second terminal, wherein the fifth message comprises an identifier of the second network element, and the fourth network element is an access management network element of the second terminal.

32. The method according to claim 31, wherein when the bidirectional information is the bidirectional identifier, the fifth message further comprises the bidirectional identifier; or
when the bidirectional information is the bidirectional session type, the fifth message further comprises the identifier of the first session.

33. The method according to claim 31 or 32, wherein the sending the fifth message to the fourth network element based on the association relationship between the first terminal and the second terminal comprises:
sending the fifth message to the fourth network element based on the association relationship between the first terminal and the second terminal and the bidirectional information.

34. The method according to any one of claims 31 to 33, wherein the fifth message further comprises the bidirectional session type.

35. A communication apparatus, comprising a functional module that implements the method according to any one of claims 1 to 34.

36. A communication apparatus, comprising at least one processor and a memory, wherein
the memory is configured to store a computer program or instructions; and
the at least one processor is configured to execute the computer program or the instructions, to enable the method according to any one of claims 1 to 34 to be performed.

37. A chip system, wherein the chip system comprises a processing circuit, and the processing circuit is coupled to a storage medium, wherein
the processing circuit is configured to: execute a part or all of computer programs or instructions in the storage medium, and implement the method according to any one of claims 1 to 34 when the part or all of the computer programs or the instructions are executed.

38. A computer-readable storage medium, wherein the computer-readable storage medium stores instructions, and when the instructions are executed by a computer, the method according to any one of claims 1 to 34 is performed.

39. A computer program product comprising a computer program or instructions, wherein when the computer program or the instructions are run on a computer, the method according to any one of claims 1 to 34 is performed.
